(19) Europäisches Patentamt
European Patent Office
Office européen des brevets

(11) **EP 4 360 838 A1**

(12) **EUROPEAN PATENT APPLICATION**

(43) Date of publication:
**01.05.2024 Bulletin 2024/18**

(21) Application number: **22204701.1**

(22) Date of filing: **31.10.2022**

(51) International Patent Classification (IPC):
**B28B 3/02** *(2006.01)* **B22F 3/105** *(2006.01)*
**B28B 3/08** *(2006.01)* **B28B 11/24** *(2006.01)*
**B30B 11/04** *(2006.01)* **B30B 15/34** *(2006.01)*
**B22F 3/14** *(2006.01)*

(52) Cooperative Patent Classification (CPC):
(C-Sets available)
**B28B 3/025; B28B 3/086; B28B 11/243;**
**B30B 9/28; B30B 11/04; B30B 15/34; B32B 18/00;**
**C04B 35/119; C04B 35/44; C04B 35/645;**
B22F 3/105; B22F 2003/1051; B22F 2999/00;
C04B 2235/3217; C04B 2235/3225; (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Heraeus Conamic North America LLC**
**Chandler, AZ 85226 (US)**

(72) Inventors:
• **Walker, Luke**
  **Chandler, AZ 85226 (US)**
• **Donelon, Matthew J.**
  **Chandler, AZ 85226 (US)**
• **Verma, Devendra**
  **Chandler, AZ 85226 (US)**

(74) Representative: **Gille Hrabal**
**Partnerschaftsgesellschaft mbB**
**Patentanwälte**
**Postfach 18 04 09**
**40571 Düsseldorf (DE)**

(54) **A SINTERING DEVICE WITH TEMPERATURE GRADIENT CONTROL**

(57) A process for the preparation of a ceramic body, comprising the steps:

a. providing a plurality of particles;

b. providing a device that comprises a sintering chamber (013) bordered by a die (006);

c. introducing the particles into the sintering chamber;

d. applying a pressure P in the range from 1 MPa to 80 MPa to the plurality of particles in the sintering chamber to obtain the ceramic body, wherein a temperature in the sintering chamber, during preparation of the ceramic body, is controlled so that the temperature at a centre of the sintering chamber is lower than the temperature at an interior surface (006) of the die.

Figure 1A 100

**(Cont. next page)**

EP 4 360 838 A1

(52) Cooperative Patent Classification (CPC): (Cont.)
C04B 2235/5436; C04B 2235/5445;
C04B 2235/6565; C04B 2235/6567;
C04B 2235/6581; C04B 2235/666;
C04B 2235/764; C04B 2235/77; C04B 2235/784;
C04B 2235/786; C04B 2235/95;
C04B 2235/9623; C04B 2237/343; C04B 2237/58

C-Sets
B22F 2999/00, B22F 2003/1051, B22F 3/003

**Description**

**FIELD OF THE INVENTION**

The invention relates in general to sintering under pressure and with electrical current, often termed spark plasma sintering (SPS). Particular aspects of the invention are directed to a sintering device, a sintering process, a ceramic body product, an assembly comprising the ceramic body and the use of a temperature difference in a sintering process.

**BACKGROUND OF THE INVENTION**

Sintering methods provide a route to forming bodies from particles through application of heat and pressure. In one method, often referred to as Spark Plasma Sintering (SPS), heating is achieved using an electric current. The spark plasma sintering method in the state of the art has been applied to various materials. Existing literature focuses on small-scale systems, providing access to parts having physical extensions of up to around 150mm. The question of preparing larger parts using SPS is assessed from a theoretical standpoint by Eugene A. Olevsky et al. in "Fundamental Aspects of Spark Plasma Sintering: I. Experimental Analysis of Scalability" (J. Am. Ceram. Soc., 95 [8], 2406 to 2413 (2012)) and "Fundamental Aspects of Spark Plasma Sintering: II. Experimental Analysis of Scalability" (J. Am. Ceram. Soc., 95 [8], 2414 to 2422 (2012)). A number of potential challenges and complications in relation to large-scale systems were identified.

**SUMMARY OF THE INVENTION**

It is an object of this invention to provide an improved process for preparing a ceramic body. It is a particular object of this invention to an improved process for preparing ceramic bodies of increased size.
It is an object of this invention to provide an improved process for preparing a ceramic body having reduced energy requirements.
It is an object of this invention to provide an improved process for preparing a ceramic body having a reduced rejection rate.
It is an object of this invention to provide an improved process for preparing a ceramic body having reduced susceptibility to fracturing.
It is an object of this invention to provide an improved process for preparing a ceramic body having reduced internal stress.
It is an object of this invention to provide an improved process for preparing a ceramic body having increased mechanical strength.
It is an object of this invention to provide an improved process for preparing a ceramic body having increased density.
It is an object of this invention to provide an improved process for preparing a ceramic body having increased homogeneity of density.
It is an object of this invention to provide an improved process for preparing a ceramic body having increased etch resistance.
It is an object of this invention to provide an improved process for preparing a ceramic body having reduced surface roughness.
It is an object of this invention to provide a device for performing the aforementioned improved processes.
A contribution to at least partially fulfilling at least one of the above-mentioned objects is made by any of the embodiments of the invention.
A first (1st) embodiment of the invention is a device having a sintering chamber, the sintering chamber being bordered by the following device parts:

    i. a first punch interior surface of a first punch;
    ii. a second punch interior surface of a second punch; and
    iii. an interior surface of a die;

wherein:

    the punches are adapted and arranged to apply a pressure of at least 1 MPa along a compression axis to a target in the sintering chamber, preferably at least 5 MPa, more preferably at least 10 MPa, most preferably at least 15 MPa. The punches may be adapted and arranged to apply up to 80 MPa, or even more; the first punch and the second punch are connected to an electrical power source, preferably adapted and arranged to provide a current of at least 5 kA, preferably at least 10 kA, more preferably at least 50 kA, most preferably at least 60 kA. The electrical power source might be adapted and arranged to provide a current of up to 100 kA, or even more;
the first and second punches comprise at least 50 wt. % carbon, based on the total weight of the punch, preferably at least 90 wt. %, more preferably at least 95 wt. %, most preferably at least 99 wt. %;
the sintering chamber has a cross-sectional width W perpendicular to the compression axis of at least 300 mm, preferably at least 500 mm, more preferably at least 700 mm. W might reach as high as 2000 mm or more. Preferably it is not more than 1500 mm, more preferably not more than 900 mm.

In a preferred embodiment of the device, the device is adapted and arranged to control a temperature in the sintering chamber, more preferably the temperature of the target during sintering. This preferred embodiment is a $2^{nd}$ embodiment of the invention, that preferably depends on the $1^{st}$ embodiment of the invention.

In a preferred embodiment of the device, the device further comprises a first layer of the first kind that is in physical contact with a surface, preferably an exterior surface, of the first punch, wherein the first layer of the first kind has an electrical resistivity in the range of 10 $\mu\Omega\cdot$m to 260 $\mu\Omega\cdot$m, preferably in the range of 20 $\mu\Omega\cdot$m to 240 $\mu\Omega\cdot$m, and more preferably in the range of 30 $\mu\Omega\cdot$m to 215 $\mu\Omega\cdot$m. This preferred embodiment is a $3^{rd}$ embodiment of the invention, that preferably depends on any of the $1^{st}$ to $2^{nd}$ embodiments of the invention. The given electrical resistivity values are measured at 25 °C.

In a preferred embodiment of the device, the first layer of the first kind has a thermal conductivity in the range of 0.1 $W\cdot m^{-1}\cdot K^{-1}$ to 55 $W\cdot m^{-1}\cdot K^{-1}$, preferably in the range of 1 $W\cdot m^{-1}\cdot K^{-1}$ to 40 $W\cdot m^{-1}\cdot K^{-1}$, and more preferably in the range of 4 $W\cdot m^{-1}\cdot K^{-1}$ to 36 $W\cdot m^{-1}\cdot K^{-1}$. This preferred embodiment is a $4^{th}$ embodiment of the invention, that preferably depends on the $3^{rd}$ embodiment of the invention.

In a preferred embodiment of the device, the first layer of the first kind is anisotropic, and wherein the first layer of the first kind has at least one or all of the following properties:

a. an electrical resistivity in a first direction is in the range of 10 $\mu\Omega\cdot$m to 70 $\mu\Omega\cdot$m, preferably in the range of 20 $\mu\Omega\cdot$m to 50 $\mu\Omega\cdot$m, and more preferably in the range of 30 $\mu\Omega\cdot$m to 40 $\mu\Omega\cdot$m;
b. an electrical resistivity in a further direction is in the range of 90 $\mu\Omega\cdot$m to 260 $\mu\Omega\cdot$m, preferably in the range of 110 $\mu\Omega\cdot$m to 240 $\mu\Omega\cdot$m, and more preferably in the range of 130 $\mu\Omega\cdot$m to 215 $\mu\Omega\cdot$m;
c. a thermal conductivity in a first direction is in the range of 20 $W\cdot m^{-1}\cdot K^{-1}$ to 55 $W\cdot m^{-1}\cdot K^{-1}$, preferably in the range of 25 $W\cdot m^{-1}\cdot K^{-1}$ to 40 $W\cdot m^{-1}\cdot K^{-1}$, and more preferably in the range of 29 $W\cdot m^{-1}\cdot K^{-1}$ to 36 $W\cdot m^{-1}\cdot K^{-1}$;
d. a thermal conductivity in a further direction is in the range of 0.1 $W\cdot m^{-1}\cdot K^{-1}$ to 20 $W\cdot m^{-1}\cdot K^{-1}$, preferably in the range of 1 $W\cdot m^{-1}\cdot K^{-1}$ to 16 $W\cdot m^{-1}\cdot K^{-1}$, and more preferably in the range of 4 $W\cdot m^{-1}\cdot K^{-1}$ to 12 $W\cdot m^{-1}\cdot K^{-1}$.

This preferred embodiment is a $5^{th}$ embodiment of the invention, that preferably depends on any of the $3^{rd}$ to $4^{th}$ embodiments of the invention. In an aspect of the $5^{th}$ embodiment, all possible combination of the features a. to d. are preferred aspects of the embodiment. These combinations are e.g., a; b; c; d; a+b; a+c; a+d; b+c; b+d; c+d; a+b+c; a+b+d; a+c+d; b+c+d; a+b+c+d. In an aspect of the $5^{th}$ embodiment, the electrical resistivity values are measured at a temperature of 25 °C. In a preferred aspect of the $5^{th}$ embodiment, the first layer of the first kind comprises carbon fibre. In this aspect, it is preferred that the first direction is parallel to the fibre axis, and the further direction is perpendicular to the fibre axis. In an aspect of the $5^{th}$ embodiment, it is preferred that the first layer of the first kind is arranged such that the further direction is parallel to the compression axis.

In a preferred embodiment of the device, the first layer of the first kind comprises carbon, silicon, or a combination thereof. This preferred embodiment is a $6^{th}$ embodiment of the invention, that preferably depends on any of the $3^{rd}$ to $5^{th}$ embodiments of the invention. In an aspect of the $6^{th}$ embodiment, it is particularly preferred that the first layer of the first kind comprises carbon, more preferably composite carbon fibre.

In a preferred embodiment of the device, the first layer of the first kind has a thickness in the range of 20 mm to 60 mm, preferably in the range of 32 mm to 48 mm, and more preferably in the range of 37 mm to 43 mm. This preferred embodiment is a $7^{th}$ embodiment of the invention, that preferably depends on any of the $3^{rd}$ to $6^{th}$ embodiments of the invention.

In a preferred embodiment of the device, the first layer of the first kind has an electrical resistance in the range of 0.5 $\mu\Omega$ to 40 $\mu\Omega$, preferably in the range of 5 $\mu\Omega$ to 25 $\mu\Omega$, and more preferably in the range of 10 $\mu\Omega$ to 20 $\mu\Omega$. This preferred embodiment is an $8^{th}$ embodiment of the invention, that preferably depends on any of the $3^{rd}$ to $7^{th}$ embodiments of the invention.

In a preferred embodiment of the device, at least one or all of the following applies:

a. the first layer of the first kind is in electrical contact with a surface, preferably the exterior surface, of the first punch;
b. the first layer of the first kind is in thermal contact with a surface, preferably the exterior surface, of the first punch.

This preferred embodiment is a 9th embodiment of the invention, that preferably depends on any of the 3rd to 8th embodiments of the invention. In an aspect of the 9th embodiment, all possible combination of the features a. and b. are preferred aspects of the embodiment. These combinations are e.g., a; b; a+b.

In a preferred embodiment of the device, the device further comprises a further layer of the first kind that is in physical contact with a surface, preferably an exterior surface, of the second punch. This preferred embodiment is a 10th embodiment of the invention, that preferably depends on any of the 1st to 9th embodiments of the invention.

In a preferred embodiment of the device, the further layer of the first kind has at least one or all of the following properties:

a. an electrical resistivity in the range of 10 $\mu\Omega\cdot$m to 260 $\mu\Omega\cdot$m, preferably in the range of 20 $\mu\Omega\cdot$m to 240 $\mu\Omega\cdot$m, and more preferably in the range of 30 $\mu\Omega\cdot$m to 215 $\mu\Omega\cdot$m. The given electrical resistivity values are measured at 25 °C;

b. a thermal conductivity in the range of 0.1 $W\cdot m^{-1}\cdot K^{-1}$ to 55 $W\cdot m^{-1}\cdot K^{-1}$, preferably in the range of 1 $W\cdot m^{-1}\cdot K^{-1}$ to 40 $W\cdot m^{-1}\cdot K^{-1}$, and more preferably in the range of 4 $W\cdot m^{-1}\cdot K^{-1}$ to 36 $W\cdot m^{-1}\cdot K^{-1}$;

c. is anisotropic;

d. comprises carbon, silicon, or a combination of at least two thereof;

e. a thickness in the range of 20 mm to 60 mm, preferably in the range of 32 mm to 48 mm, and more preferably in the range of 37 mm to 43 mm;

f. an electrical resistance in the range of 0.5 $\mu\Omega$ to 40 $\mu\Omega$, preferably in the range of 5 $\mu\Omega$ to 25 $\mu\Omega$, and more preferably in the range of 10 $\mu\Omega$ to 20 $\mu\Omega$.

This preferred embodiment is an 11th embodiment of the invention, that preferably depends on the 10th embodiment of the invention. In an aspect of the 11th embodiment, all possible combination of the features a. to f. are preferred aspects of the embodiment. These combinations are e.g., a; b; c; d; e; f; a+b; a+c; a+d; a+e; a+f; b+c; b+d; b+e; b+f; c+d; c+e; c+f; d+e; d+f; e+f; a+b+c; a+b+d; a+b+e; a+b+f; a+c+d; a+c+e; a+c+f; a+d+e; a+d+f; a+e+f; b+c+d; b+c+e; b+c+f; b+d+e; b+d+f; b+e+f; c+d+e; c+d+f; c+e+f; d+e+f; a+b+c+d; a+b+c+e; a+b+c+f; a+b+d+e; a+b+d+f; a+b+e+f; a+c+d+e; a+c+d+f; a+c+e+f; a+d+e+f; b+c+d+e; b+c+d+f; b+c+e+f; b+d+e+f; c+d+e+f; a+b+c+d+e; a+b+c+d+f; a+b+c+e+f; a+b+d+e+f; a+c+d+e+f; b+c+d+e+f; a+b+c+d+e+f. In an aspect of feature c. of the 11th embodiment, it is preferred that the further layer of the first kind has at least one or all of the properties a. to d. listed in the 5th embodiment. In this aspect, the preferred aspects of the 5th embodiment are also preferred aspects for the further layer of the first kind (e.g., the further layer of the first kind comprises carbon fibre, and it is preferred that the first direction is parallel to the fibre axis, and the further direction is perpendicular to the fibre axis). In an aspect of feature d. of the 11th embodiment, it is particularly preferred that the further layer of the first kind comprises carbon, more preferably composite carbon fibre.

In a preferred embodiment of the device, at least one or all of the following applies:

a. the further layer of the first kind is in electrical contact with a surface, preferably the exterior surface, of the second punch;

b. the further layer of the first kind is in thermal contact with a surface, preferably the exterior surface, of the second punch.

This preferred embodiment is a 12th embodiment of the invention, that preferably depends on any of the 10th to 11th embodiments of the invention. In an aspect of the 12th embodiment, all possible combination of the features a. and b. are preferred aspects of the embodiment. These combinations are e.g., a; b; a+b.

In a preferred embodiment of the device, the device further comprises a layer of the further kind arranged at least partially around an exterior surface of the die, and wherein the layer of the further kind has a thermal conductivity, measured at 1400 °C, that is in the range of 0.2 $W\cdot m^{-1}\cdot K^{-1}$ to 0.65 $W\cdot m^{-1}\cdot K^{-1}$, preferably in the range of 0.3 $W\cdot m^{-1}\cdot K^{-1}$ to 0.55 $W\cdot m^{-1}\cdot K^{-1}$, and further preferably in the range of 0.36 $W\cdot m^{-1}\cdot K^{-1}$ to 0.5 $W\cdot m^{-1}\cdot K^{-1}$. This preferred embodiment is a 13th embodiment of the invention, that preferably depends on any of the 1st to 12th embodiments of the invention.

In a preferred embodiment of the device, the layer of the further kind has at least one or all of the following properties:

a. a density in the range of 0.005 $g.cm^{-3}$ to 0.22 $g\cdot cm^{-3}$, preferably in the range of 0.02 $g\cdot cm^{-3}$ to 0.15 $g\cdot cm^{-3}$, and more preferably in the range of 0.06 $g\cdot cm^{-3}$ to 0.11 $g\cdot cm^{-3}$;

b. a mean specific heat capacity, measured at a temperature of 1400 °C, in the range of 1.40 $J\cdot g^{-1}\cdot°C^{-1}$ to 1.95 $J\cdot g^{-1}\cdot°C^{-1}$, preferably in the range of 1.52 $J\cdot g^{-1}\cdot°C^{-1}$ to 1.80 $J\cdot g^{-1}\cdot°C^{-1}$, and more preferably in the range of 1.60 $J\cdot g^{-1}\cdot°C^{-1}$ to 1.72 $J\cdot g^{-1}\cdot°C^{-1}$;

c. a thermal emissivity in the range of 0.7 and 0.99, preferably in the range of 0.85 and 0.99, and more preferably in the range of 0.95 and 0.99.

This preferred embodiment is a 14th embodiment of the invention, that preferably depends on the 13th embodiment of the invention. In an aspect of the 14th embodiment, all possible combination of the features a. to c. are preferred aspects of the embodiment. These combinations are e.g., a; b; c; a+b; a+c; b+c; a+b+c.
In a preferred embodiment of the device, the layer of the further kind comprises at least one or all of the following:

a. natural fibres, synthetic fibres, or a combination thereof. An example of a synthetic fibre is rayon;
b. a foam, preferably an open cell foam.

This preferred embodiment is a 15th embodiment of the invention, that preferably depends on any of the 13th to 14th embodiments of the invention. In an aspect of the 15th embodiment, all possible combination of the features a. and b. are preferred aspects of the embodiment. These combinations are e.g., a; b; a+b.
In a preferred embodiment of the device, the layer of the further kind comprises carbon, preferably graphite, a ceramic, molybdenum, or a combination of at least two thereof. This preferred embodiment is a 16th embodiment of the invention, that preferably depends on any of the 13th to 15th embodiments of the invention. An example of a ceramic is a ceramic comprising alumina zirconia, preferably alumina zirconia fibre.
In a preferred embodiment of the device, the layer of the further kind covers at least 70 %, more preferably at least 80 %, even more preferably at least 90 %, and further preferably at least 95 % of the exterior surface of the die. This preferred embodiment is a 17th embodiment of the invention, that preferably depends on any of the 13th to 16th embodiments of the invention.
In a preferred embodiment of the device, the layer of the further kind has a thickness in the range of 1 mm to 45 mm, preferably in the range of 5 mm to 35 mm, and more preferably in the range of 10 mm to 27 mm. This preferred embodiment is an 18th embodiment of the invention, that preferably depends on any of the 13th to 17th embodiments of the invention.
In a preferred embodiment of the device, at least one or all of the following applies:

a. a thickness of the layer of the further kind, measured parallel to the compression axis, is in the range of 4 mm to 25 mm, preferably in the range of 7 mm to 17 mm, and more preferably is in the range of 10 mm to 14 mm;
b. a thickness of the layer of the further kind, measured parallel to the compression axis, is in the range of 15 mm to 35 mm, preferably in the range of 20 mm to 30 mm, and more preferably in the range of 23 mm to 27 mm.

This preferred embodiment is a 19th embodiment of the invention, that preferably depends on any of the 13th to 18th embodiments of the invention. In an aspect of the 19th embodiment, all possible combination of the features a. and b. are preferred aspects of the embodiment. These combinations are e.g., a; b; a+b.
In a preferred embodiment of the device, at least one or all of the following is adapted and arranged to control the temperature in the sintering chamber, more preferably the temperature of the target during sintering.:

a. the first layer of the first kind;
b. the further layer of the first kind;
c. the layer of the further kind.

This preferred embodiment is a 20th embodiment of the invention, that preferably depends on any of the 2nd to 19th embodiments of the invention. In an aspect of the 20th embodiment, all possible combination of the features a. to c. are preferred aspects of the embodiment. These combinations are e.g., a; b; c; a+b; a+c; b+c; a+b+c.
In a preferred embodiment of the device, the electrical power source is a rectified DC power source. This preferred embodiment is a 21st embodiment of the invention, that preferably depends on any of the 1st to 20th embodiments of the invention.
In a preferred embodiment of the device, the electrical power source is adapted an arranged for one or more of the following:

a. to rectify 3-phase alternating current to direct current;
b. to rectify single phase alternating current to direct current

This preferred embodiment is a 22nd embodiment of the invention, that preferably depends on any of the 1st to 21st embodiments of the invention. In an aspect of the 22nd embodiment, all possible combination of the features a. and b. are preferred aspects of the embodiment. These combinations are e.g., a; b; a+b.

In a preferred embodiment of the device, the device comprises one or more further device-parts selected from the list consisting of:

> a. a housing;
> b. a vacuum apparatus;
> c. a hydraulic piston;
> d. a foil lining at the interior surface of the die.

This preferred embodiment is a 23rd embodiment of the invention, that preferably depends on any of the 1st to 22nd embodiments of the invention. In an aspect of the 23rd embodiment, all possible combination of the features a. to d. are preferred aspects of the embodiment. These combinations are e.g., a; b; c; d; a+b; a+c; a+d; b+c; b+d; c+d; a+b+c; a+b+d; a+c+d; b+c+d; a+b+c+d.

A twenty-fourth (24rd) embodiment of the invention is a process for the preparation of a ceramic body, comprising the steps:

> a. providing a plurality of particles;
> b. providing a device that comprises a sintering chamber bordered by an interior surface of a die;
> c. introducing the particles into the sintering chamber;
> d. applying a pressure P in the range from 1 MPa to 80 MPa to the plurality of particles in the sintering chamber to obtain the ceramic body.

In a preferred embodiment of the process for the preparation of a ceramic body, a temperature in the sintering chamber is controlled so that the temperature at a centre of the sintering chamber is lower than the temperature at an interior surface of the die. This preferred embodiment is a 25th embodiment of the invention, that preferably depends on the 24th embodiment of the invention. In an aspect of the 25th embodiment, it is preferred to control the temperature during preparation of the ceramic body, *e.g.*, step d. in the 24th embodiment.

In a preferred embodiment of the process for the preparation of a ceramic body, a temperature gradient between the centre of the sintering chamber and the interior surface of the die is in the range of 0.005 °C/mm to 0.55 °C/mm, preferably in the range of 0.02 °C/mm to 0.45 °C/mm, and more preferably in the range of 0.07 °C/mm to 0.38 °C/mm. This preferred embodiment is a 26th embodiment of the invention, that preferably depends on any of the 24th to 25th embodiments of the invention. In an aspect of the 26th embodiment, it is preferred that the temperature gradient is present during preparation of the ceramic body, *e.g.*, step d. in the 24th embodiment.

In a preferred embodiment of the process for the preparation of a ceramic body, the temperature difference between the centre of the sintering chamber and the interior surface of the die is in the range of 1 °C to 150 °C, preferably in the range of 10 °C to 135 °C, and more preferably in the range of 20 °C to 125 °C. This preferred embodiment is a 27th embodiment of the invention, that preferably depends on any of the 24th to 26th embodiments of the invention. In an aspect of the 27th embodiment, it is preferred that the temperature difference is present during preparation of the ceramic body, *e.g.*, step d. in the 24th embodiment.

In a preferred embodiment of the process for the preparation of a ceramic body, the sintering chamber is bordered by at least one punch with a punch surface, and wherein the electrical power density measured at the punch surface, preferably an interior punch surface, is adjusted according to a diameter of the ceramic body that is prepared. This preferred embodiment is a 28th embodiment of the invention, that preferably depends on any of the 24th to 27th embodiments of the invention. In an aspect of the 28th embodiment, it is preferred adjust the electrical power density prior to preparation of the ceramic body, *e.g.*, prior to step d. in the 24th embodiment.

In a preferred embodiment of the process for the preparation of a ceramic body, the electrical power density is decreased when the diameter of the ceramic body, to be prepared, is increased. This preferred embodiment is a 29th embodiment of the invention, that preferably depends on any of the 24th to 28th embodiments of the invention. In an aspect of the 29th embodiment, it is preferred adjust the electrical power density prior to preparation of the ceramic body, *e.g.*, prior to step d. in the 24th embodiment.

In a preferred embodiment of the process for the preparation of a ceramic body, at least one or all of the following applies:

> a. the electrical power density is adjusted to be in the range of 0.05 W·mm$^2$ to 1 W·mm$^2$, preferably in the range of 0.1 W·mm$^2$ to 0.7 W·mm$^2$, and more preferably in the range of 0.3 W·mm$^2$ to 0.5 W·mm$^2$ when the ceramic body, to be prepared, has a diameter in the range of > 500 mm to 650 mm;
> b. the electrical power density is adjusted to be in the range of > 0.1 W·mm$^2$ to 1.6 W·mm$^2$, preferably in the range of > 0.3 W·mm$^2$ to 1.3 W·mm$^2$, and more preferably in the range of > 0.5 W·mm$^2$ to 1.0 W·mm$^2$ when the ceramic body, to be prepared, has a diameter in the range of 300 mm to 500 mm.

This preferred embodiment is a 30th embodiment of the invention, that preferably depends on any of the 24th to 29th embodiments of the invention. In an aspect of the 30th embodiment, all possible combination of the features a. and b. are preferred aspects of the embodiment. These combinations are *e.g.*, a; b; a+b. In an aspect of the 30th embodiment, it is preferred adjust the electrical power density prior to preparation of the ceramic body, *e.g.*, prior to step d. in the 24th embodiment.

In a preferred embodiment of the process for the preparation of a ceramic body, further comprising the step of allowing the prepared ceramic body to cool in the sintering chamber at a rate that is in the range of 100 °C·hour$^{-1}$ to 165 °C·hour$^{-1}$, preferably in the range of 115 °C·hour$^{-1}$ to 150 °C·hour$^{-1}$, and more preferably in the range of 125 °C·hour$^{-1}$ to 140 °C·hour$^{-1}$. This preferred embodiment is a 31st embodiment of the invention, that preferably depends on any of the 24th to 30th embodiments of the invention. In an aspect of the 31st embodiment, it is preferred to perform the cooling step after the ceramic body has been obtained in step d. of the 24th embodiment.

In a preferred embodiment of the process for the preparation of a ceramic body, a temperature of the die is controlled. This preferred embodiment is a 32nd embodiment of the invention, that preferably depends on any of the 24th to 31st embodiments of the invention. In an aspect of the 32nd embodiment, it is preferred that the temperature is controlled during preparation of the ceramic body, *e.g.*, step d. in the 24th embodiment.

In a preferred embodiment of the process for the preparation of a ceramic body, an electrical current I in the range from 1 kA to 100 kA, preferably in the range from 5 kA to 100 kA, more preferably in the range from 10 kA to 100 kA, even more preferably in the range from 50 kA to 100 kA, and further preferably in the range from 60 kA to 100 kA is applied to the device. This preferred embodiment is a 33rd embodiment of the invention, that preferably depends on any of the 24th to 32nd embodiments of the invention.

In a preferred embodiment of the process for the preparation of a ceramic body, the particles contain at least 30 wt. % yttrium in any chemical form, based on the total mass of yttrium atoms and the total mass of the particles, preferably at least 40 wt. %, more preferably at least 45 wt. %. This preferred embodiment is a 34th embodiment of the invention, that preferably depends on any of the 24th to 33rd embodiments of the invention.

In a preferred embodiment of the process for the preparation of a ceramic body, a device according to the invention is used, more preferably the device is according to any of the 1st to 23rd embodiments of the invention. This preferred embodiment is a 35th embodiment of the invention, that preferably depends on any of the 24th to 34th embodiments of the invention.

A thirty-sixth (36th) embodiment of the invention is a ceramic body obtained a process, according to the invention, for preparing a ceramic body, preferably a ceramic body obtainable by a process according to any of the 24th to 35th embodiments of the invention.

In a preferred embodiment of the ceramic body, at least one or all of the following are satisfied for the ceramic body:

    a. A value for density divided by theoretical density that is less than 1.0;
    b. An average grain size of less than 5 $\mu$m, preferably less than 4.5 $\mu$m, more preferably less than 4 $\mu$m, and further preferably from 1 $\mu$m to 3 $\mu$m;
    c. A standard deviation for the average grain size distribution that is in the range of 1.2 $\pm$ 2 $\mu$m to 2.8 $\pm$ 2 $\mu$m, preferably in the range of 1.6 $\pm$ 2 $\mu$m to 2.4 $\pm$ 2 $\mu$m, and more preferably in the range of 1.8 $\pm$ 2 $\mu$m to 2.2 $\pm$ 2 $\mu$m.

This preferred embodiment is a 37th embodiment of the invention, that preferably depends on the 36th embodiment of the invention. In an aspect of the 37th embodiment, all possible combination of the features a. to c. are preferred aspects of the embodiment. These combinations are *e.g.*, a; b; c; a+b; a+c; b+c; a+b+c. In an aspect of the 37th embodiment, feature a., the value for density divided by theoretical density is preferably at least 0.9, more preferably at least 0.95, and further preferably at least 0.99.

A thirty-eight (38th) embodiment of the invention is an assembly comprising a ceramic body according to the invention, preferably the ceramic body according to any of the 36th to 37th embodiments of the invention.

In a preferred embodiment of the assembly, the assembly is selected from the group consisting of:

    a. A plasma etcher,
    b. Plasma processing chamber (etch or deposition processes),
    c. A wear plate for a bearing, and
    d. A mill liner of a grinding mill.

This preferred embodiment is a 39th embodiment of the invention, that preferably depends on the 38th embodiment of the invention.

A fortieth (40th) embodiment of the invention is a use of a temperature difference for preparing a ceramic body having an extension of at least 300 mm by spark plasma sintering, preferably a temperature difference in the range from 5 °C to 140 °C, preferably in the range from 15 °C to 130 °C, and more preferably in the range from 25 °C to 120 °C. In an aspect of the 40th embodiment, the temperature difference is preferably a temperature difference in a sintering chamber of a spark plasma sintering (SPS) device, more preferably during use of the SPS device for preparing the ceramic body. In an aspect of the 40th embodiment, the ceramic body preferably has an extension of at least 300 mm, more preferably at least 400 mm, and further preferably at least 550 mm,

A forty-first (41st) embodiment of the invention is a use of a layer of the first kind for preparing a ceramic body having an extension of at least 300 mm, preferably at least 400 mm, and more preferably at least 550 mm, by spark plasma sintering.

A forty-second (42nd) embodiment of the invention is a use of a layer of the further kind for preparing a ceramic body having an extension of at least 300 mm, preferably at least 400 mm, and more preferably at least 550 mm, by spark plasma sintering.

## DETAILED DESCRIPTION

The following abbreviations are used in the description: AC (alternating current), DC (direct current).

### Sintering

The invention is directed to a sintering process. A preferred sintering process produces a body from particles through application of pressure and heat. It is preferred for heating to be through application of an electric current.

A preferred sintering increases the density of the plurality of particles to produce the body. The body preferably has a higher density than the plurality of particles. A preferred sintering produces a product body having a density at least 95%, preferably at least 99%, more preferably at least 99.9% of its theoretical density.

### Device

The device of the invention is adapted and arranged for sintering particles to produce a body. The device comprises at least a first punch, a second punch and a die. The device has a sintering chamber.

### Sintering chamber

The device of the invention has a sintering chamber. The sintering chamber is preferably adapted and arranged for accommodating a plurality of particles. The sintering chamber is preferably bordered by a first punch interior surface of a first punch, a second punch interior surface of a second punch and an interior surface of a die. The sintering chamber may be bordered by the first punch interior surface, the second punch interior surface and the interior surface only, or may additionally by bordered by one or more further surfaces. The sintering chamber is preferably bordered by the first punch interior surface, the second punch interior surface and the interior surface only.

The sintering chamber may have one or more symmetry planes or one or more axes of symmetry or both. The sintering chamber may have the form of a volume of revolution. The sintering chamber may be cylindrical.

### Punches

The device of the invention has a first punch and a second punch. The first punch has a first punch interior surface, which borders the sintering chamber. The second punch has a second punch interior surface, which borders the sintering chamber. It is preferred for one or both of the punch interior surfaces to be substantially flat.

The punches are preferably adapted and arranged for applying a force to a target within the sintering chamber, preferably for producing an elevated pressure in the sintering chamber. The punches are preferably adapted and arranged for producing a pressure of at least 1 MPa in the sintering chamber, preferably at least 5 MPa, more preferably at least 10 MPa, most preferably at least 15 MPa. The punches may be adapted and arrange to apply up to 80 MPa, or even more. The first and second punches are preferably positioned vertically above and below the sintering chamber respectively. The first and second punches are preferably adapted and arranged to move along a compression axis.

The punches are preferably conductive. The punches are preferably adapted and arranged to provide a current of at least 5 kA across the sintering chamber, preferably at least 10 kA, more preferably at least 50 kA, most preferably at least 60 kA. The electrical power source might be adapted and arranged to provide a current of up to 100 kA, or even more.

The punches are preferably of a carbon material, most preferably of graphite. The punches preferably comprise at least 95 wt. % carbon, more preferably at least 99 wt. %, more preferably still at least 99.5 wt. % carbon. The punches may comprise one or more selected from: a layer and a region; of a material other than carbon.

### Die

The device of the invention has a die. The die has an interior surface bordering the sintering chamber.

In one embodiment, the die is electrically conductive. It is preferred for the die to have an anisotropic electrical conductivity, preferably having a material orientation axis substantially aligned with the compression axis.

In one embodiment, the die comprises one or more elements selected from group 14 of the periodic table. Group 14 elements are sometimes also referred to as group IVA elements or group 4A elements. The die preferably comprises one or more selected from the group consisting of: C, Si, Ge, Sn & Pb, preferably selected from C, Si, Ge and Sn, most preferably selected from C & Si. C is the most preferred group 14 element. In one aspect of this embodiment, the die contains 50 wt % or more, based on the total weight of the die, of group 14 elements, more preferably 90 wt % or more, most preferably 95 wt % or more.

In one embodiment, the die contains at least 50 wt % C, based on the total weight of the die, preferably 90 wt. % or more, more preferably 95 wt. % or more, most preferably 99 wt. % or more. In one aspect of this embodiment, the die additionally comprises one or more further group 14 elements, preferably selected from Si, Ge, Sn & Pb, more preferably selected from Si, Ge & Sn, more preferably still selected from Si & Ge, most preferably Si. Further group 14 elements are preferably present with a total content of at least 0.1 wt. %, more preferably at least 1 wt. %, most preferably at least 2 wt. %. Elements other than C, Si, Ge, Sn & Pb in this embodiment are preferably present with a total content of not more than 1 wt. %, more preferably not more than 0.5 wt. %, most preferably not more than 0.1 wt. %.

The die is preferably of a carbon material, most preferably of graphite.

The die may be a single piece or multiple pieces, preferably a single piece. It is preferred that the die is a single contiguous body, more preferably a single cylindrical body. The die is preferably present as 2 to 10 pieces, more preferably 2 to 5 pieces, more preferably still 2 to 3 pieces, most preferably 2 pieces.

The die may have one or more symmetry planes or one or more axes of symmetry or both. The sintering chamber may have the form of a volume of revolution. The sintering chamber may be hollow cylindrical.

### Orientation

The device of the invention has a compression axis. The device is preferably adapted and arranged to apply force to the sintering chamber along the direction of the compression axis.

It is preferred for the first punch to be movable along the compression axis. It is preferred for the second punch to be movable along the compression axis. It is preferred for both punches to be movable along the compression axis.

In one embodiment, the compression axis is substantially vertical, preferably with the first punch positioned above the second punch. In an aspect of this embodiment, the first punch interior surface is preferably a lower surface of the first punch. In another aspect of this embodiment, the first punch interior surface is substantially horizontal. In another aspect of this embodiment, the second punch interior surface is preferably an upper surface of the second punch. In another aspect of this embodiment, the second punch interior surface is substantially horizontal.

### Layer of the third kind

In an aspect of the invention, it is preferred that a layer of a third kind is present at at least a part of the interior surface of the die. A layer of the third kind is preferably a layer of a carbon material. In the aspect wherein the layer of the third kind is present, it is preferred that the layer of the third kind is present at 20% or more of the interior surface of the die, based on the total area of the interior surface of the die, preferably 50% or more, more preferably 90% or more, most preferably 95% or more. In the aspect wherein the layer of the third kind is present, it is most preferable for the layer of the third kind to be present at substantially the whole interior surface of the die.

In the aspect wherein the layer of the third kind is present, it is preferred that the layer of the third kind lines the interior surface of the die, preferably lines substantially the entire surface of the die.

In the aspect wherein the layer of the third kind is present, it is preferred that a first gap is present between the interior surface of the die and the first punch, and that the layer of the third kind is present in at least part of the gap, preferably substantially all of the gap. In the aspect wherein the layer of the third kind is present, it is preferred that a second gap is present between the interior surface of the die and the second punch, and that the layer of the third kind is present in at least part of the gap, preferably substantially all of the gap.

In the aspect wherein the layer of the third kind is present, it is preferred that the layer of the third kind is a single layer, or has at least two stacked sub-layers. In the aspect wherein the layer of the third kind is present, it is preferred that the layer of the third kind preferably has at least two stacked sub-layers, preferably between from 2 to 20 stacked sub-layers. In the aspect wherein the layer of the third kind is present, it is preferred that the single layer, or any sub-layer can be present over part of the internal perimeter of the die, or over substantially the entire internal perimeter of the die, or over the entire internal perimeter of the die as well as overlapping itself at least partially.

In the aspect wherein the layer of the third kind is present, it is preferred that the layer of the third kind is preferably close to the interior surface of the die, more preferably in physical contact with the interior surface of the die. In the aspect wherein the layer of the third kind is present, it is preferred that the layer of the third kind may be a piece which is not integrally connected to the interior surface of the die. This can be the case in particular prior to the sintering process. In the aspect wherein the layer of the third kind is present, it is preferred that the layer of the third kind may be integrally connected to the interior surface of the die. This can be the case in particular following the sintering process.

The thickness of the layer of the third kind is determined as a mean over the entire interior surface of the die.

In the aspect wherein the layer of the third kind is present, it is preferred that the layer of the third kind is a graphite foil. A graphite foil preferably has a plurality of 2D platelets. A graphite foil is preferably arranged to form a roll.

In the aspect wherein the layer of the third kind is present, it is preferred that the layer of the third kind preferably has an ash content of less than 1 wt. %, more preferably less than 0.5 wt. %, more preferably still less than 0.4 wt. %.

**Layer of the first kind**

In an aspect of the invention, it is preferred that a device, according to the invention, comprises a first layer of the first kind that is in physical contact with a surface of the first punch. In this aspect, it is preferred that the first layer of the first kind is in electrical contact, thermal contact, or both, with an interior surface of the first punch. In this aspect, it is more preferred that the first layer of the first kind is in electrical contact, thermal contact, or both, with an exterior surface of the first punch.

In another aspect of the invention, it is preferred that a device, according to the invention, comprises a further layer of the first kind that is in physical contact with a surface of the second punch. In this aspect, it is preferred that the further layer of the first kind is in electrical contact, thermal contact, or both, with an interior surface of the second punch. In this aspect, it is more preferred that the further layer of the first kind is in electrical contact, thermal contact, or both, with an exterior surface of the second punch.

In an aspect of the invention, it is preferred that a device, according to the invention, comprises a first layer of the first kind that is in physical contact with a surface of the first punch, and a further layer of the first kind that is in physical contact with a surface of the second punch. In this aspect, it is particularly preferred that the first layer of the first kind is in electrical contact and thermal contact with the exterior surface of the first punch, and that the further layer of the first kind is in electrical contact and thermal contact with the exterior surface of the second punch.

In an aspect of the invention, it is preferred that at least 70 %, more preferably at least 80 %, and further preferably at least 90 % of a surface, preferably an exterior surface, of the first punch is in physical contact with the first layer of the first kind. In an aspect of the invention, it is preferred that at least 70 %, more preferably at least 80 %, and further preferably at least 90 % of a surface, preferably an exterior surface, of the first punch is in electrical contact with the first layer of the first kind. In an aspect of the invention, it is preferred that at least 70 %, more preferably at least 80 %, and further preferably at least 90 % of a surface, preferably an exterior surface, of the first punch is in thermal contact with the first layer of the first kind.

In an aspect of the invention, it is preferred that at least 70 %, more preferably at least 80 %, and further preferably at least 90 % of a surface, preferably an exterior surface, of the second punch is in physical contact with the further layer of the first kind. In an aspect of the invention, it is preferred that at least 70 %, more preferably at least 80 %, and further preferably at least 90 % of a surface, preferably an exterior surface, of the second punch is in electrical contact with the further layer of the first kind. In an aspect of the invention, it is preferred that at least 70 %, more preferably at least 80 %, and further preferably at least 90 % of a surface, preferably an exterior surface, of the second punch is in thermal contact with the further layer of the first kind.

In an aspect of the invention, it is preferred that a layer of the first kind comprises carbon (preferably in the form of carbon fibres), silicon, or a combination of at least two thereof. An example of a combination of carbon and silicon is silicon carbide. An example of a combination of carbon and a plastic is a carbon fibre reinforced plastic.

In an aspect of the invention, it is preferred that a layer of the first kind is "anisotropic". This should preferably be understood to mean that a value for at least one physical property measured in a first direction differs from a value of the at least on physical property measured in a further direction. Examples of the at least one physical property is the electrical resistivity and the thermal conductivity of the layer of the first kind. In this aspect, it is preferred that the first direction is perpendicular to the further direction.

In an aspect of the invention, it is preferred that a layer of the first kind comprises at least two sub-layers stacked on top of each other. In this aspect, it is preferred that a sub-layer has a thickness in the range from 12 mm to 28 mm, preferably in the range from 17 mm to 23 mm.

A layer of the first kind comprising composite carbon fibre are well-known to the person skilled in the art. Such a layer of the first kind can be commercially obtained from, e.g., SGL Carbon SE (Germany) and CeraMaterials (USA).

**Layer of the further kind**

In an aspect of the invention, it is preferred that the device, according to the invention, comprises a layer of the further kind. The exterior surface of the die should preferably be understood as any surface of the die that does not border the sintering chamber. In this aspect, it is preferred that the layer of the further kind is in physical contact with the exterior surface of the die.

A preferred layer of the further kind comprises at least one or all of the following; carbon felt (e.g., graphite felt), ceramic felt, graphite foam, ceramic foam, or a combination of at least two thereof. In this aspect, it is particularly preferred that the layer of the further kind comprises graphite felt. A layer of the further kind is well-known to the skilled person, and is commercially available from all major graphite producers, such as Mersen S.A. (France).

**Kinds of contact**

If two components of the device are in *"electrical contact"*, this should be understood to mean that an electric current can flow between the two components. *E.g.*, if a layer of the first kind and a surface of the punch are in electrical contact, current can flow between the layer of the first kind and the surface of the punch.

If two components of the device are in *"thermal contact"*, this should be understood to mean that heat can flow between the two components. *E.g.*, if a layer of the first kind and a surface of the punch are in thermal contact, heat can flow between the layer of the first kind and the surface of the punch.

If two components of the device are in *"physical contact"*, this should be understood to mean that the two components touch each other. *E.g.*, if a layer of the first kind and a surface of the punch are in physical contact, the layer of the first kind touches the surface of the punch. *E.g.*, if a layer of the further kind and an exterior surface of the die are in physical contact, the layer of the further kind touches the exterior surface of the die.

**Controlling power input**

In an aspect of the invention, it is preferred that the electrical power input to the device is controlled by controlling an electrical power source connected to the device. For example, the current provided by the electrical power source is reduced, or increased. In another aspect of the invention, it is preferred that the electrical power input to the device is controlled using at least one layer of the first kind. In a further aspect of the invention, it is preferred that the electrical power input to the device is controlled by controlling the electrical power source connected to the device and using at least one layer of the first kind.

**Product**

The product of the invention is a ceramic body. The ceramic body preferably has a higher density than the plurality of particles. A preferred body is a contiguous object. A preferred body has a value of density divided by theoretical density of at least 0.9, preferably at least 0.95, more preferably at least 0.99.

A preferred ceramic is an inorganic material. A preferred ceramic is non-metallic. Some preferred ceramics are oxides, nitrides, carbides, or combinations thereof. A preferred ceramic is a refractory material.

A preferred oxide ceramic may be the oxide of a single element, or a mixed oxide of more than one element. An oxide ceramic may comprise some nitride or carbide content or both. An oxide ceramic may be free of nitride or free of carbide or free of both. A preferred ceramic oxide may be stoichiometric or non-stoichiometric. A stoichiometric oxide preferably has whole number ratios between the number of atoms of its constituent elements. An oxide ceramic may contain two or more groupings of elements, each element being in a stoichiometric ratio to each other elements of its own grouping, but in a non-stoichiometric ratio to each member of other groupings.

A preferred nitride ceramic may be the nitride of a single element, or a mixed nitride of more than one element. A nitride ceramic may comprise some oxide or carbide content or both. A nitride ceramic may be free of oxide or free of carbide or free of both. A preferred ceramic nitride may be stoichiometric or non-stoichiometric. A stoichiometric nitride preferably has whole number ratios between the number of atoms of its constituent elements. A nitride ceramic may contain two or more groupings of elements, each element being in a stoichiometric ratio to each other elements of its own grouping, but in a non-stoichiometric ratio to each member of other groupings. A preferred carbide ceramic may be the carbide of a single element, or a mixed carbide of more than one element. A carbide ceramic may comprise some oxide or nitride content or both. A carbide ceramic may be free of oxide or free of nitride or free of both. A preferred ceramic carbide may be stoichiometric or non-stoichiometric. A stoichiometric carbide preferably has whole number ratios between the number of atoms of its constituent elements. A carbide ceramic may contain two or more groupings of elements, each element being in a stoichiometric ratio to each other elements of its own grouping, but in a non-stoichiometric ratio to each member of other groupings.

A preferred constituent element of the ceramic is yttrium. The ceramic may contain at least 20 wt. % yttrium atoms, based on the total weight of the ceramic, preferably at least 30 wt. %, more preferably at least 40 wt. %, most preferably at least 45 wt. %. The content of yttrium might be as high as 50 wt. %, or even more. A preferred yttrium containing ceramic comprises oxide. A preferred yttrium containing ceramic is an oxide ceramic, preferably a mixed oxide ceramic, comprising atoms of one or more elements distinct from yttrium and oxygen. A mixed oxide ceramic is often quantified in terms the content of simple oxides which would be required to prepare it. A preferred yttrium containing mixed oxide ceramic comprises at least 20 wt. % yttrium oxide, based on the total weight of the ceramic, preferably at least 30 wt. %, more preferably at least 40 wt. %, most preferably at least 45 wt. %. The content of yttrium oxide might be as high as 50 wt. %, or even more.

Further to oxygen, nitrogen and carbon, some preferred elements present in the ceramic are one or more selected form the list consisting of yttrium, zirconium, aluminium, titanium, silicon, boron, phosphorus and beryllium. These elements could be constituents of oxides, nitrides, carbides or combinations thereof.

Oxygen-containing ceramics are often quantified in terms the content of simple oxides which would be required to prepare them. Some preferred oxide constituents are, silica, boria, beryllium oxide, yttrium oxide, aluminum oxide, zirconium oxide, titanium oxide, silicon dioxide, quartz, calcium oxide, cerium oxide, nickel oxide, copper oxide, strontium oxide, scandium oxide, samarium oxide, hafnium oxide, vanadium oxide, niobium oxide, tungsten oxide, manganese oxide, tantalum oxide, terbium oxide, europium oxide, neodymium oxide, yttrium aluminate oxide, zirconium aluminate oxide, lanthanum oxide, lutetium oxide and erbium oxide.

Some preferred mixed oxides are one or more selected from the group consisting of: zirconium silicate oxide, hafnium aluminate oxide, hafnium silicate oxide, titanium silicate oxide, lanthanum silicate oxide, lanthanum aluminate oxide (LAO), yttrium silicate oxide, titanium silicate oxide, tantalum silicate oxide, oxynitride, barium titanate, lead titanate and lead zirconate titanate. Nitrogen-containing ceramics are often quantified in terms the content of simple nitrides which would be required to prepare them. Some preferred nitride constituents are one or more selected from the group consisting of: silicon nitride, titanium nitride, yttrium nitride, aluminum nitride, boron nitride, beryllium nitride and tungsten nitride.

Carbon-containing ceramics are often quantified in terms the content of simple carbides which would be required to prepare them. Some preferred carbides constituent are silicon carbide, tungsten carbide, chromium carbide, vanadium carbide, niobium carbide, molybdenum carbide, tantalum carbide, titanium carbide, zirconium carbide, hafnium carbide and boron carbide.

The ceramic may comprise one or more borides. Some preferred boride constituents of the ceramic are one or more selected from the group consisting of: molybdenum boride, chromium boride, hafnium boride, zirconium boride, tantalum boride and titanium boride or titanium diboride. Some preferred ceramic species are one or more selected from the group consisting of: sapphire, alumina, yttrium aluminium monoclinic (YAM), preferably $Y_4Al_2O_9$, yttrium aluminum garnet (YAG), preferably $Y_3Al_5O_{12}$, yttrium aluminum perovskite (YAP), preferably $YAlO_3$, cordierite, mullite, magnesium aluminate spinel, zirconia, erbium aluminum garnet (EAG), yttrium oxynitride, silicon oxynitride, and forsterite.

### Starting Materials

According to the invention, a plurality of particles in the sintering chamber can be converted into a body by application of pressure and electrical current. The particles may have the same chemical composition as the product. The preferred chemical compositions for the product are also preferred chemical compositions for the particles.

A preferred size for the particles is in the range from 0.1 $\mu$m to 20 $\mu$m. A preferred average size for the particles is in the range of 0.3 $\mu$m to 7 $\mu$m, more preferably in the range of 0.5 $\mu$m to 5 $\mu$m.

### Process conditions

The sintering of the particles proceeds under pressure. A pressure of at least 1 MPa is applied to the particles in the sintering chamber, preferably at least 5 MPa, more preferably at least 10 MPa. The pressure applied may be in the range from 15 MPa to 30 MPa. Pressures of up to around 80 MPa or even more may be applied.

The sintering of the particles proceeds with application of an electric current. Preferably, an electric current of at least 5 kA is applied across the sintering chamber, more preferably at least 10 kA, more preferably at least 50 kA. Electrical currents of up to 100 kA or even greater can be applied.

The process is preferably performed in a non-oxidising atmosphere. The process may be performed in a vacuum, the gas pressure around the device being less than 10 mPa, preferably less than 5 mPa, more preferably less than 1 mPa. The process may be performed in an inert atmosphere, preferably argon.

In an aspect of the invention, it is preferred that during a process, according to the invention, for the preparation of a ceramic body, a potential difference is applied between a first punch interior surface and a second punch interior surface of a device according to the invention, wherein the potential difference is in the range of 5 V to 10 V, more preferably in the range of 5 V to 7 V, and further preferably in the range of 6 V to 6.5 V.

**Technical applications**

The ceramic body finds use in various technical applications. Some particular applications are one or more selected form the list consisting of: a plasma etcher, a plasma processing chamber (etch or deposition processes), a wear plate for a bearing or a mill liner of a grinding mill.

**Electrical Power Source**

The electrical power source is preferably adapted and arrange for producing Joule heating in the plurality of particles. The electrical power source may be alternating current, pulsed direct current or continuous direct current. Continuous direct current is preferred.

In an aspect of the invention, it is preferred that the electrical power source is a rectified DC power source. A rectified DC power source should preferably be understood to mean an electrical power source that is adapted and arranged to convert an alternating current to a direct current. Examples of a rectified DC power source is an electrical power source that is adapted and arranged to perform partial-wave rectification, full-wave rectification (e.g., a bridge rectifier), or both. A preferred rectified DC power source comprises a thyristor, a silicon controlled rectifier, or both.

The electrical power source is preferably adapted and arranged to provide a current of at least 5 kA, more preferably at least 10 kA, even more preferably at least 50 kA, further preferably at least 60 kA, and even further preferably at least 100 kA.

**FIGURES**

The invention is now further elucidated with the aid of the following figures. The figures are not drawn to scale.

Figure 1A is a cross sectional side-view of a first embodiment of a device according to the invention.
Figure 1B is a cross sectional side-view of a second embodiment of a device according to the invention.
Figure 1C is a cross sectional side-view of a third embodiment of a device according to the invention.
Figure 1D is a schematic illustration of how the thickness of the layer of the further kind is measured.
Figure 1E is a cross sectional side-view of a fourth embodiment of a device according to the invention.
Figure 2 is a cross sectional side-view of the first embodiment of the device of Figure 1A with the chamber loaded and ready for sintering.
Figure 3 shows the steps of a preparation process for the ceramic body.
Figure 4 shows a cutaway cross-section of the sinter chamber.
Figures 5a and 5b show the core test employed herein.
Figure 6 shows core test success as a function of temperature gradient.
Figure 7 shows the electrical power density required to produce a ceramic body of sufficiently high quality.

**Figure Descriptions**

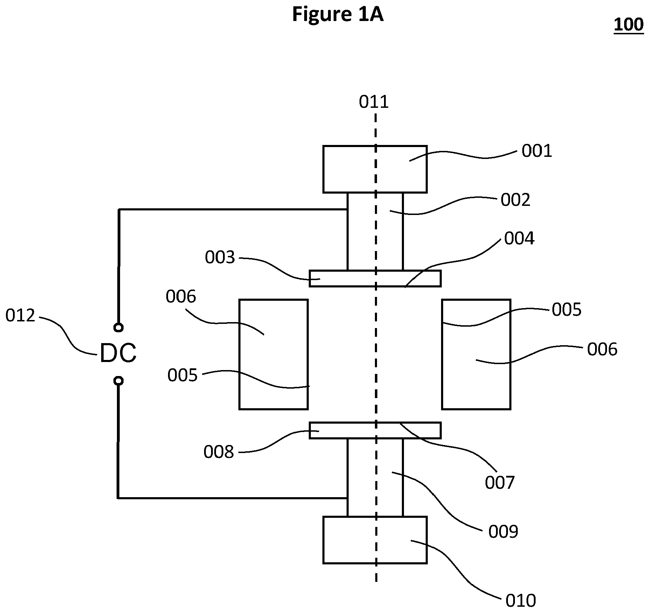

Figure 1A is a cross sectional side-view of a first embodiment of a device 100 according to the invention. The device has a first punch 003 having a first punch interior surface 004 and a second punch 008 having a second punch interior surface 007. The punches 003 and 008 are made of solid graphite. The punch interior surfaces 004 and 007 are also of graphite. The first punch 003 is positioned above the second punch 008. The first punch 003 is oriented with the first punch interior surface 004 being horizontal and facing downwards. The first punch 003 can be moved in a vertical direction by a first pushing means 001 connected via a first piston 002. The second punch 008 is oriented with the second punch interior surface 007 horizontal and facing upwards. The second punch 008 can be moved in a vertical direction by a second pushing means 010 connected via a second piston 009. The first 004 and second 007 punch interior surfaces can thus be moved towards each other along the direction of a compression axis 011.

The device has a die 006 shaped as a hollow graphite cylinder with an interior surface 005. The device has an electrical power source 012 adapted and arrange to supply DC current and is connected to the first 003 and second 008 punches. The sintering chamber 013 of the invention is formed as a cavity bordered by the first punch interior surface 004 from above, the second punch interior surface 007 from below, and the interior surface 005 to the sides. In this case, both punch interior surfaces 004 and 007 are circular and the interior surface 005 is cylindrical and the sintering chamber 013 is thus cylindrical.

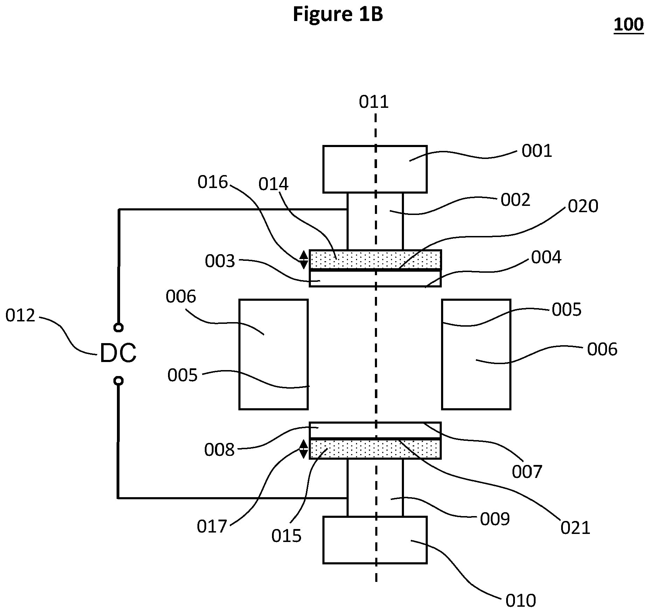

Figure 1B is a cross sectional side-view of a second embodiment of a device 100 according to the invention. The device in Figure 1B has the same features as the device in Figure 1A. However, the device in Figure 1B has the following additional features. A first layer of the first kind 014, with a thickness 016, is arranged between the punch 003 and the piston 002. The first layer of the first kind 014 is in electrical, thermal, and physical contact with a first exterior surface 020 of the punch 003. Similarly, a second layer of the first kind 015, with a thickness 017, is arranged between the punch 008 and the piston 009. The further layer of the first kind 015 is in electrical, thermal, and physical contact with a second exterior surface 021 of the punch 008.The layers of the first kind 014 and 015 are made of composite carbon material. By varying the thickness 016, or the thickness 017, or both, the electrical power input to the punches 003 and 008 can be controlled to be in a selected range.

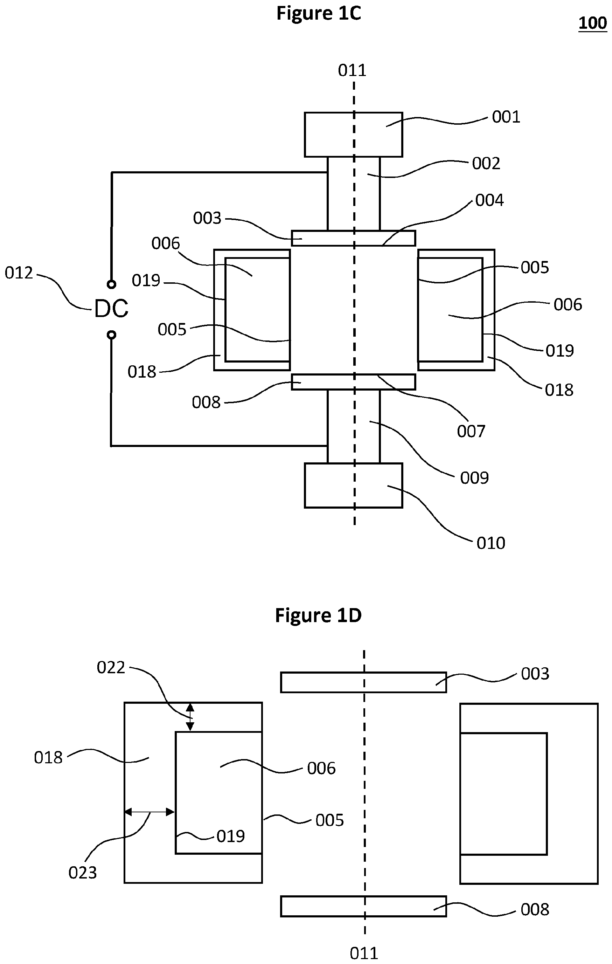

Figure 1C is a cross sectional side-view of a third embodiment of a device 100 according to the invention. The device in Figure 1C has the same features as the device in Figure 1A. However, the device in Figure 1C has the following additional features. A layer of the further kind 018, made of felt, surrounds an exterior surface 019 of the die 006. The exterior surface 019 is the surface of the die 006 that does not border the sintering chamber 013. The layer of the further kind 018 can be uniform around the exterior surface 019. However, it is preferred that a thickness of the layer of the further kind 018 varies around the exterior surface 019. As shown in Figure 1C, the thickness of the layer of the further kind 018, measured parallel the compression axis 011 (*i.e.*, at the top and bottom of the die 006), is less than the thickness measured perpendicular to the compression axis 011 (*i.e.*, at the side of the die 006).

Figure 1D is a schematic illustration of how the thickness of the layer of the further kind 018 is measured. Figure 1D is an enlargement of the die 006 and the layer of the further kind 018 in Figure 1C. The thickness of the layer of the further kind parallel to the compression 011 is measured as indicated by the arrow 022. The thickness of the layer of the further kind perpendicular to the compression 011 is measured as indicated by the arrow 023.

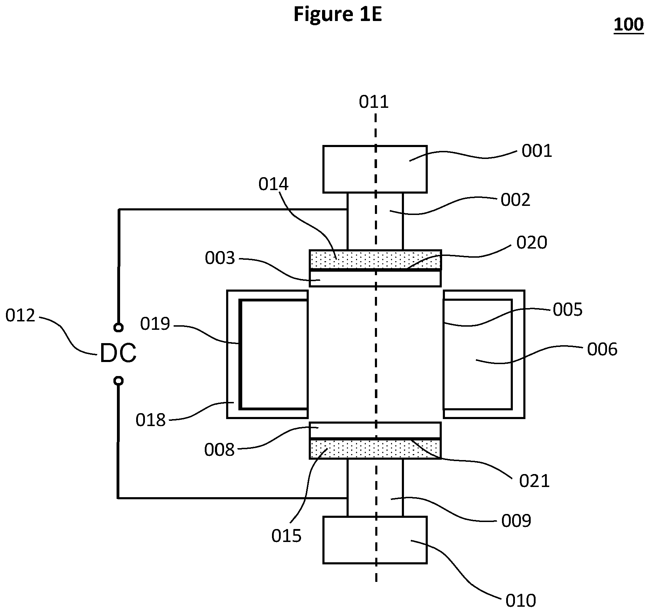

Figure 1E is a cross sectional side-view of a fourth embodiment of a device 100 according to the invention. The device 100 in Figure 1E is a combination of the second and third embodiments of the device 100 shown in Figures 1B and 1C. In particular, the fourth embodiment of the device 100 in Figure 1E has the layers of the first kind 014 and 015, as well as the layer of the further kind 018.

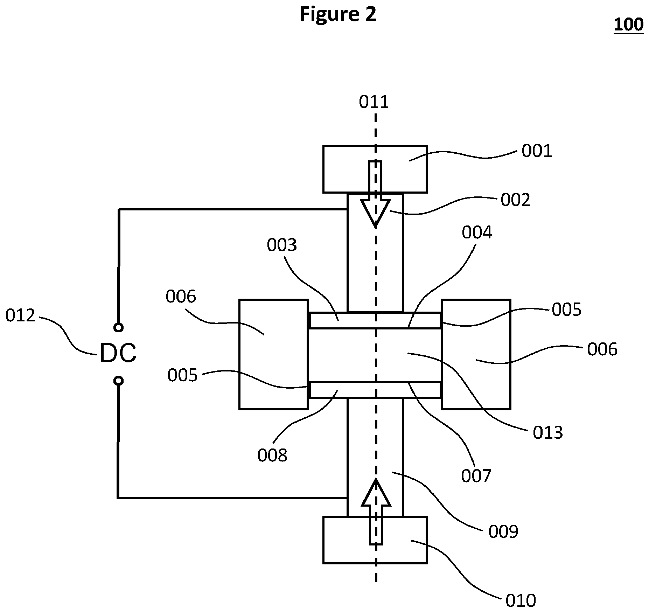

Figure 2 is a cross sectional side-view of the first embodiment of the device 100 of Figure 1A with the sintering chamber 013 loaded and ready for sintering. The sintering chamber 013 is defined by the first punch interior surface 004 from above, the second punch interior surface 007 from below and the interior surface 005 of the die 006 to the sides. The sintering chamber 013 thus has a cylindrical shape. The sintering chamber 013 is filled with a plurality of particles for sintering. The plurality of particles may be tamped after introduction into the sintering chamber to compact it. The punch interior surfaces (004, 007) are then moved inwards to abut against the compacted disc of particles. For sintering, the punch interior surfaces (004, 007) are moved inwards along the compression axis 011 as shown by the arrows. The punch interior surfaces (004, 007) apply a force to the particles thus creating a pressure in the chamber. An electrical current is applied across the sintering chamber 013 (between the first punch interior surface 004 and the second punch interior surface 007) from the electrical power source 012. When the sintering process is complete, the ceramic body is allowed to cool.

The process described in Figure 2 also applies to the second embodiment of the device 100 as shown in Figure 1B. When the device 100 is according to the second embodiment, the electrical power input, and thus the electrical power density, to the sintering chamber is controlled by the layers of the first kind 014 and 015. The presence of the layers of the first kind 014 and 015 make it possible to create a temperature gradient between a centre of the sintering chamber 013 and the interior surface 005 of the die 006. The centre of the sintering chamber 013 is defined as an imaginary line that is coincident with the compression axis 011 passing though the sintering chamber 013. Furthermore, the temperature at the centre of the sintering chamber 013 is lower than the temperature at the interior surface 005 of the die 006.

The process described in Figure 2 also applies to the third embodiment of the device 100 as shown in Figure 1C. The presence of the layer of the further kind 018 makes it possible to create a temperature gradient between a centre of the sintering chamber 013 and the interior surface 005 of the die 006. Furthermore, the temperature at the centre of the sintering chamber 013 is lower than the temperature at the interior surface 005 of the die 006. Different thicknesses of the layer of the further kind allow for different cooling rates of the ceramic body.

The process described in Figure 2 also applies to the fourth embodiment of the device 100 as described in Figure 1E. A device that has a combination of at least one layer of the first kind and a layer of the further kind allows for control of the temperature gradient between a centre of the sintering chamber 013 and the interior surface 005 of the die 006. Furthermore, the temperature at the centre of the sintering chamber 013 is lower than the temperature at the interior surface 005 of the die 006.

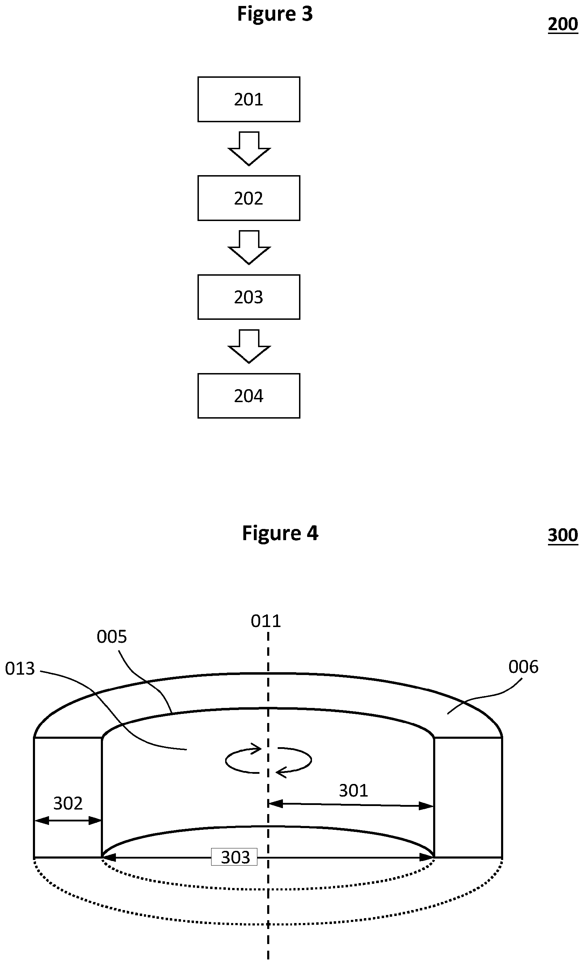

Figure 3 shows the steps of a preparation process 200 for the ceramic body. In a first step a. 201, a plurality of particles is provided. The particle size $d_{50}$ may be for example 3 $\mu$m. An example material for the particles is yttrium aluminium garnet (YAG). In a second step b. 202, a device as described in this disclosure is provided. The sintering chamber of the device may for example have a diameter of 500 mm. In a third step c. 203, the plurality of particles is introduced into the sintering chamber of the device. Optionally, a graphite layer at the interior surface of the die is introduced prior to the particles. Optionally, a graphite layer at the second punch interior surface can also be introduced prior to the particles. The plurality of particles can be tamped to compact the particles into a cylinder. Optionally, a graphite layer for the first punch interior surface can be lain atop the particles before below the first punch interior surface. In a fourth step d. 204, a pressure of, for example, 50 MPa is applied to the sintering chamber and a current is passed through the chamber to convert the particles into the product ceramic body.

Figure 4 shows a cutaway cross-section 300 of the sintering chamber 013. The cut is vertical, along a diameter of the sintering chamber 013, passing through the compression axis 011, to show the sintering chamber 013 from the side. The die 006 is a hollow cylinder with a wall thickness 302. The die thickness 302, the layer thickness 301 and the diameter 303 of the sintering chamber 013 are each measured in a radial direction, perpendicular to the compression axis 011. Figure 4 also shows how a temperature gradient is measured in the sintering chamber 013. The temperature gradient is measured in a radial direction, perpendicular to the compression axis 011. Furthermore, the temperature gradient is measured between the compression axis 011 (passing through a centre of the sintering chamber 013) and the interior surface 005 of the die 006, as shown by the arrow 301.

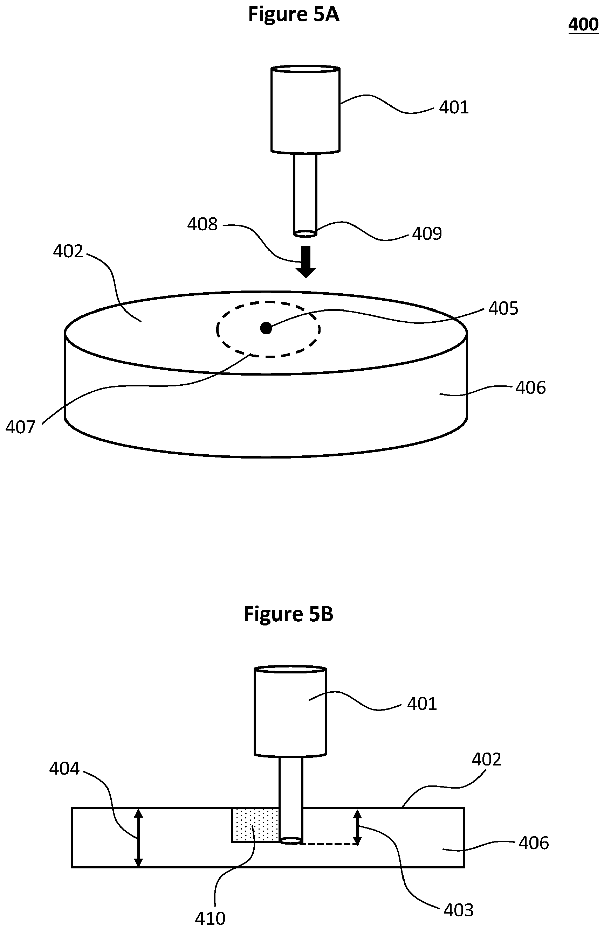

Figures 5a and 5b show the core test 400 employed herein. Figure 5a shows a perspective view prior to commencement of the test. A coring tool 401 is positioned above a first flat surface 402 of a flat-form ceramic sample 406. In this case, the flat-form ceramic sample 406 is in the form of a cylindrical disc. The tool 401 is oriented along an axis perpendicular to the first flat surface 402. The arrow 408 shows the direction of the travel of the tool 401 along the axis towards the flat-form ceramic sample 406. Once in contact with the flat-form ceramic sample 406, the coring tool 401 moves in a circular motion inside a coring region 407 that has a diameter that is larger than a diameter of a tip 409 of the coring tool 401. The circular motion is parallel to the first flat surface 402, and leads to the removal of a cylindrical region from the flat-form ceramic sample 406. Furthermore, a geometric centre 405 of the first flat surface 402 is also the geometric centre 405 of the coring region 407. Figure 5b shows a cutaway view from the side during the core test. The tool 401 has advanced a distance 403 into the flat-form ceramic sample 406, which has a sample thickness 404. Figure 5b shows that the coring tool 401 has removed a cylindrical section 410 from the flat-form ceramic sample 406. The distance 403 is determined between the first flat surface 402 and the end of the tool 401. The test finishes at the first observation of cracks in the flat-form ceramic sample 406. The success level is determined as the ratio of the distance cored 403 to the total thickness of the flat-form ceramic sample 404 at the end of the test, expressed as a percentage.

**Test Methods**

Core Test

A flat-form sample ceramic having a first flat face and a thickness perpendicular to the first flat face, obtained in the examples, is cored to determine if there is excess internal stress. The coring tool 401 is a 10 mm diamond coring tool commercially available, for example from Schott Diamantwerkzeuge GmbH of Stadtoldendorf, Germany. The tool is used in commercially available CNC machines to cut a core in in the part under test. The hole formed in the part by cutting the core is from 56 mm to 60 mm, having a nominal diameter of 58 mm. The core is cut by passing the tool 401 over the surface of the part in a helical pattern to bore a hole in the part. Suitable CNC machines that can be used for this test are available, for example, from DMG Mori Company Limited of Los Angeles, California, USA, such as its Ultrasonic 60 eVo linear model. Another provider of suitable CNC machines is Fair Friend Ent. Co. Ltd. Of Taiwan, such as the Feeler HV-1650 model. The test concludes either when the core extends all the way through the sample ceramic or when the sample ceramic is observed to crack, whichever occurs first. The success score is given as the percentage of the thickness of the core cut in the sample under test. 100% success rating indicates low internal stress if any; above 75% but below 100% success rating indicates low internal stress; 25% to 75% success rating indicates corresponds to medium stress; lower than 25% success rating indicates high internal stress.

Particle size and average particle size

Particle size and the average particle size of the ceramic particles were determined using a Laser Scattering Particle Size Distribution Analyzer, Model LA-960, from Horiba Scientific of Piscataway, New Jersey in the United States.

Thickness

The thickness of the layer of the first kind and the layer of the further kind is measured using a caliper.

Temperature

The temperature in the sintering chamber is measured using an exposed thermocouple located at the centre of the sintering chamber. A suitable thermocouple is commercially available from Nanmac Corporation (USA)

The temperature at the at the interior surface of the die is measured using a spot pyrometer. A suitable pyrometer is available from Fluke Process Instruments (USA).

Electrical resistivity and electrical resistance

The electrical resistivity of a layer of the first kind is measured according to the standard ASTM B193-20.

Thermal properties of the layers

Thermal conductivity is measured according to the standard ASTM E1461-13 (2022).
Thermal emissivity is measured according to the standard ASTM C835-06 (2020).
Specific heat capacity is measured according to the standard ASTM E1269-11 (2018)

Cooling rate of ceramic body

The cooling rate $R_c$ is calculated using the following formula:

$$R_C = (T_S - 20\ ^{\circ}C)\ /\ t_C,$$

where $T_s$ is the temperature of the ceramic body measured upon completion of the sintering process, and $t_c$ is the time required for the ceramic body to cool from $T_s$ to 20 °C.

Density and theoretical density

The density of the ceramic body is measured according to the standard ASTM B962 - 17. The theoretical density is calculated from x-ray diffraction (XRD) data. From the XRD data, the unit cell parameters a, b and c are obtained. Using the unit cell parameters, the unit cell volume is calculated. Based on the crystal structure of the material, the number of molecular units present in every unit cell is determined. The molecular weight of the ceramic body is known as its chemical structure is known. Using the foregoing data, the theoretical density is calculated as follows:

$$\text{Theoretical density} = (\text{Molecular weight x No. of molecules per unit cell}) / (\text{Volume of unit cell x Avogardo's number}).$$

Average grain size

The average grain size of the ceramic body is measured according to the standard ASTM E112-13 (2021).

**Examples**

The working of the invention is now further elucidated with the aid of specific examples. The invention is not limited by the features of the examples, which are intended to provide a specific concrete realisation of the invention.
In the examples below,

$$\Delta T = T_2 - T_1,$$

where $T_2$ is the temperature measured at the centre of the sintering chamber and $T_1$ is the temperature measured at the interior surface of the die.
In the examples below, a ceramic body is considered of sufficiently high quality if the core test success is at least 90 % and if the average grain size is below 5 $\mu$m.

**Example A**

A device is provided according to the schematic shown in Figure 1E. The die has a height of 1 m and the punches each have a circular punch interior surface of diameter 650 mm. The sintering chamber correspondingly had cylindrical shape of cross-sectional diameter 650 mm. The punches are moved by pistons. Furthermore, layers of the first kind, in the form of carbon fibre composite plates, are located between the punches and the pistons, as described in Figure 1B. Furthermore, an exterior surface of the die is surrounded by a felt layer (a layer of the further kind), similar as described in Figure 1C. The felt layer has a non-uniform thickness, as also described in Figure 1C. The thickness of the felt layer, measured parallel to the compression axis, is 10 mm, while the thickness of the felt layer, measured perpendicular to the compression axis, is 20 mm.

Commercially available yttrium oxide and aluminium oxide powders having a particle size $d_{50}$ of 3 $\mu$m were mixed together and 5 kg of the mixture introduced into the sintering chamber, spread to an approximately level height and compacted with a force of about 40 tons to a compacted height of 20 mm. After sintering, this powder mixture forms yttrium aluminium garnet (YAG). Next, a mixture of commercially available powders were introduced into the sintering chamber for producing zirconia toughened alumina (ZTA) when sintered, in amount of 27 kg and spread to an approximately even of height of about 100 mm. Finally, a mixture of the powders for forming YAG and ZTA were introduced into the sintering chamber in an amount of 7 kg and spread to an approximately even height of about 30 mm.

The punches were moved inwards to arrive at a position as shown in Figure 2. Force was applied to the powder in the sintering chamber by the first and second punches to arrive at a sintering chamber pressure of around 15 MPa. A current supplied via the punches was passed through the sintering chamber for a total of 9 to 10 hours. The product was a flat form cylindrical ceramic disc with a diameter of approximately 650 mm and thickness of approximately 26 mm.

The example was repeated using different values for the temperature difference $\Delta T$ measured between a centre of the sintering chamber and an interior surface of the die, as shown in Table 1 below. The density ratio in Table 1 is a value for the bulk density of the ceramic body divided by the theoretical density of the ceramic body. The average grain size refers to the average size of the crystallites, or crystals, of the ceramic body.

While the foregoing examples were of cylindrical ceramic disc of three layers, the method disclosed herein is also suitable for such discs of single and two layer forms.

**Example B**

Example B is performed in the same manner as Example A, but with a 100 mm circular diameter for the punch interior surfaces. The results are also shown in Table 1 below.

**Table 1**

| Experiment | Punch interior surface diameter [mm] | $\Delta T$ [°C] | Core test success [%] | Density ratio | Average grain size [$\mu$m] | Comments |
|---|---|---|---|---|---|---|
| A1 | 650 | 10 | 0 | 0.99 | 5 | Ceramic body fractures from inside |
| A2 | 650 | -15 | 60 | 0.99 | 5 | Ceramic body fractures from inside |
| A3 | 650 | -50 | 100 | 0.99 | 4 | |
| A4 | 650 | -100 | 100 | 0.99 | 4 | |
| A5 | 650 | -135 | 65 | 0.99 | 4 | Ceramic body fractures from outside |
| A6 | 650 | -160 | 0 | 0.90 | 3 | Ceramic body fractures from outside |
| B1 | 100 | 10 | 100 | 0.99 | 3 | |
| B2 | 100 | -15 | 100 | 0.99 | 3 | |
| B3 | 100 | -50 | 100 | 0.99 | 3 | |
| B4 | 100 | -100 | 100 | 0.99 | 3 | |
| B5 | 100 | -135 | 100 | 0.99 | 3 | |

(continued)

| Experiment | Punch interior surface diameter [mm] | $\Delta T$ [°C] | Core test success [%] | Density ratio | Average grain size [$\mu$m] | Comments |
|---|---|---|---|---|---|---|
| B6 | 100 | -160 | 100 | 0.99 | 3 | |

When considering the results in Table 1 for the punch interior surface with a circular diameter of 100 mm, there is no indication that the temperature gradient $\Delta T$ should be within a specific range in order to produce sufficiently high-quality ceramic bodies with a diameter of 650 mm.

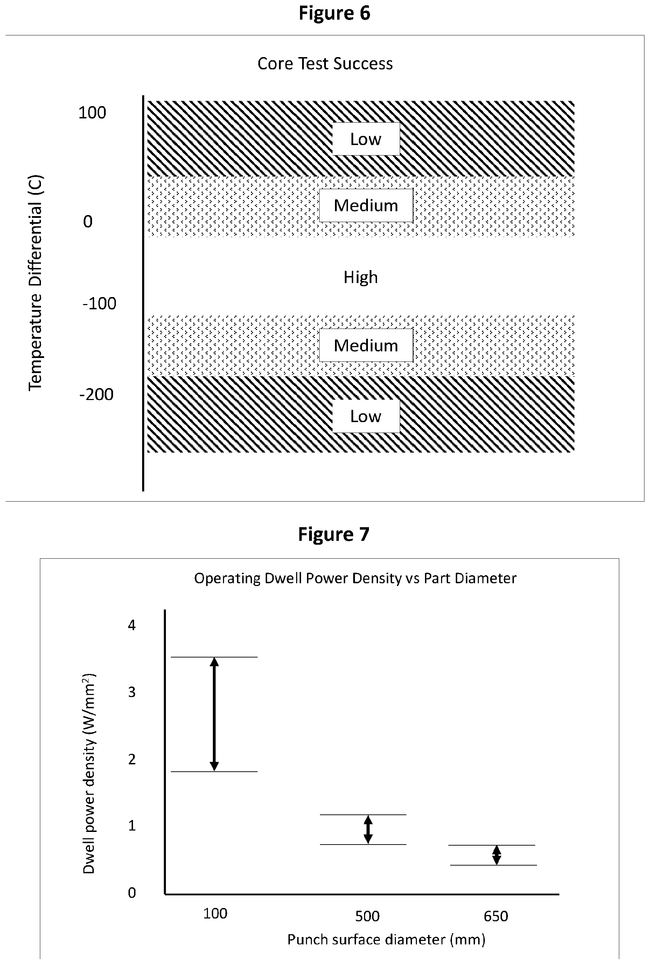

Figure 6 shows the core test success as a function of the temperature gradient $\Delta T$ for Example A. In Figure 6, "Low" corresponds to a core test success rate between 0 % and 70 %, "Medium" corresponds to a core test success rate between > 70 % and 90 %, and "High" corresponds to a core test success rate of more than 90 %. In Figure 6, the "High" core test success rate is obtained when $\Delta T$ lies in the range of 20 °C to 125 °C.

**Example C**

A device is provided according to the schematic shown in Figure 1B. The die has a height of 1 m and the punches each have a circular punch interior surface of diameter 650 mm. The sintering chamber correspondingly had cylindrical shape of cross-sectional diameter 650 mm. The punches are moved by pistons. Furthermore, layers of carbon fibre composite plates are located between the punches and the pistons, as described in Figure 1B.

Commercially available yttrium oxide and aluminium oxide powders having a particle size $d_{50}$ of 3 $\mu$m were mixed together and 5 kg of the mixture introduced into the sintering chamber, spread to an approximately level height and compacted with a force of about 40 tons to a compacted height of 20 mm. After sintering, this powder mixture forms yttrium aluminium garnet (YAG). Next, a mixture of commercially available powders were introduced into the sintering chamber for producing zirconia toughened alumina (ZTA) when sintered, in amount of 27 kg and spread to an approximately even of height of about 100 mm. Finally, a mixture of the powders for forming YAG and ZTA were introduced into the sintering chamber in an amount of 7 kg and spread to an approximately even height of about 30 mm.

The punches were moved inwards to arrive at a position as shown in Figure 2. Force was applied to the powder in the sintering chamber by the first and second punches to arrive at a sintering chamber pressure of around 15 MPa. 40 to 70 kA supplied via the punches was passed through the sintering chamber for a total of 9 to 10 hours. The product was a flat form cylindrical ceramic disc with a diameter of approximately 650 mm and thickness of approximately 26 mm.

The example was repeated using different values for the electrical power density, as shown in Table 1 below. The electrical power density is defined as the electrical power input $P$ is calculated using the below formula:

$$P = I*V/A,$$

where $I$ is the current supplied to the sintering chamber, $V$ is the potential difference between the first punch interior surface and the second punch interior surface, and $A$ is the surface area of the first punch interior surface (the surfaces areas of the first punch interior surface and the second punch interior surface are the same). The electrical power density is varied by varying the thickness of the carbon fibre composite plates.

The density ratio in Table 2 is a value for the bulk density of the ceramic body divided by the theoretical density of the ceramic body. The average grain size refers to the average size of the crystallites, or crystals, of the ceramic body.

While the foregoing examples were of cylindrical ceramic disc of three layers, the method disclosed herein is also suitable for such discs of single and two layer forms.

Example D

Example D is performed in the same manner as Example C, but with a 100 mm circular diameter for the punch interior surfaces. The results are also shown in Table 2 below.

**Table 2**

| Experiment | Punch interior surface diameter [mm] | Power density [kW/m²] | Core test success [%] | Heating current [kA] | ΔT [°C] | Density ratio | Average grain size [µm] | Comment |
|---|---|---|---|---|---|---|---|---|
| C1 | 650 | 980 | 0 | 140 | 150 | 0.99 | 5 | * |
| C2 | 650 | 785 | 0 | 110 | 25 | 0.99 | 5 | * |
| C3 | 650 | 705 | 75 | 90 | -25 | 0.99 | 4 | |
| C4 | 650 | 580 | 100 | 70 | -100 | 0.99 | 4 | |
| C5 | 650 | 380 | 70 | 60 | -150 | 0.99 | 4 | |
| C6 | 650 | 300 | 0 | 50 | -250 | 0.90 | 3 | ** |
| D1 | 100 | 980 | 100 | 10 | 0 | 0.99 | 3 | |
| D2 | 100 | 785 | 100 | 10 | 0 | 0.99 | 3 | |
| D3 | 100 | 705 | 100 | 6 | 0 | 0.99 | 3 | |
| D4 | 100 | 580 | 100 | 6 | 0 | 0.99 | 3 | |
| D5 | 100 | 380 | 95 | 4 | 0 | 0.99 | 3 | |
| D6 | 100 | 300 | 100 | 4 | 0 | 0.99 | 3 | |

Comments to Table 2:
* The grain sizes have a very large standard deviation. In addition, there is also extreme grain growth at the edges of the ceramic body that is produced.
** The grain sizes have a very large standard deviation.

When considering the results in Table 2 for the punch interior surface with a circular diameter of 100 mm, there is no indication that the electrical power density should be varied in order to produce sufficiently high-quality ceramic bodies with a diameter of 650 mm.

Results similar to those of Table 2 are also illustrated in Figure 7. Figure 7 shows the electrical power density that is required to produce a ceramic body of sufficiently high quality. For ceramic bodies with a diameter of 100 mm, a very large electrical power density range (-1.8 to -3.5 W/mm²) can be used when producing ceramic bodies. For ceramic bodies with a diameter of 500 mm, the electrical power density range (-1.2 to -0.6 W/mm²) is narrower, compared to the range for a 100 mm ceramic body. The range for the 500 mm part also falls outside the range for the 100 mm part. For ceramic bodies with a diameter of 650 mm, the electrical power density range is the narrowest (-0.6 to -0.4 W/mm²). The range for the 650 mm part also falls outside the ranges for the 100 mm and 500 mm parts.

**Example E**

A device is provided according to the schematic shown in Figure 1C. The die has a height of 1 m and the punches each have a circular punch interior surface of diameter 650 mm. The sintering chamber correspondingly had cylindrical shape of cross-sectional diameter 650 mm. Furthermore, an exterior surface of the die is surrounded by a felt layer (a layer of the further kind), similar as described in Figure 1C.

Commercially available yttrium oxide and aluminium oxide powders having a particle size $d_{50}$ of 3 µm were mixed together and 5 kg of the mixture introduced into the sintering chamber, spread to an approximately level height and compacted with a force of about 40 tons to a compacted height of 20 mm. After sintering, this powder mixture forms yttrium aluminium garnet (YAG). Next, a mixture of commercially available powders were introduced into the sintering chamber for producing zirconia toughened alumina (ZTA) when sintered, in amount of 27 kg and spread to an approximately even of height of about 100 mm. Finally, a mixture of the powders for forming YAG and ZTA were introduced into the sintering chamber in an amount of 7 kg and spread to an approximately even height of about 30 mm.

The punches were moved inwards to arrive at a position as shown in Figure 2. Force was applied to the powder in the sintering chamber by the first and second punches to arrive at a sintering chamber pressure of around 15 MPa. 40 to 70 kA supplied via the punches was passed through the sintering chamber for a total of 9 to 10 hours. The product was a flat form cylindrical ceramic disc with a diameter of approximately 650 mm and thickness of approximately 26 mm.

The felt layer has a non-uniform thickness, as described in Figure 1C. The thickness of the felt layer, measured parallel to the compression axis, is 0.5 times the thickness of the felt measured perpendicular to the compression axis. The example was repeated using a different thickness for the felt layer. The thickness, measured perpendicular to the compression axis, used for the different examples are shown in Table 3. Note that in Example E1 there is no felt layer present on any part of the exterior surface of the die. The density ratio in Table 3 is a value for the bulk density of the ceramic body divided by the theoretical density of the ceramic body. The average grain size refers to the average size of the crystallites, or crystals, of the ceramic body.

While the foregoing examples were of cylindrical ceramic disc of three layers, the method disclosed herein is also suitable for such discs of single and two layer forms.

## Example F

Example F is performed in the same manner as Example E, but with a 100 mm circular diameter for the punch interior surfaces. The results are also shown in Table 3 below. Note that in Example F1 there is no felt layer present on any part of the exterior surface of the die.

**Table 3**

| Experiment | Punch interior surface diameter [mm] | Thickness of felt layer [mm] | Core test success [%] | Heating current [kA] | $\Delta T$ (°C) | Density ratio | Average grain size [μm] | Comments |
|---|---|---|---|---|---|---|---|---|
| E1 | 650 | 0 | 10 | 90 | 120 | 0.99 | 5 | |
| E2 | 650 | 10 | 50 | 80 | 50 | 0.99 | 4 | |
| E3 | 650 | 20 | 100 | 70 | -20 | 0.99 | 3 | |
| E4 | 650 | 30 | 100 | 70 | -100 | 0.99 | 3 | |
| E5 | 650 | 40 | 60 | 55 | -200 | 0.99 | 3 | |
| E6 | 650 | 50 | 0 | 40 | -300 | 0.90 | 2 | Part breaks - does not survive sintering |
| F1 | 100 | 0 | 100 | 6 | 0 | 0.99 | 3 | |
| F2 | 100 | 10 | 100 | 6 | 0 | 0.99 | 3 | |
| F3 | 100 | 20 | 98 | 6 | 0 | 0.99 | 3 | |
| F4 | 100 | 30 | 100 | 6 | 0 | 0.99 | 3 | |
| F5 | 100 | 40 | 100 | 6 | 0 | 0.99 | 3 | |
| F6 | 100 | 50 | 99 | 6 | 0 | 0.99 | 3 | |

When considering the results in Table 3 for the punch interior surface with a circular diameter of 100 mm, there is no indication that the presence of a felt layer is required to in order to produce sufficiently high-quality ceramic bodies with a diameter of 650 mm. Table 3 also shows that when a felt layer is present for the punch interior surface with a circular diameter of 100 mm, there is no indication that the thickness of the felt layer should be varied in order to produce sufficiently high-quality ceramic bodies with a diameter of 650 mm.

## Further examples

The preceding examples A to F were repeated, but with the circular diameter for the punch interior surfaces being 400 mm and 500 mm respectively. For ceramic bodies with diameters of 400 mm and 500 mm, the influence of $\Delta T$, the electrical power density, and the thickness of the felt jacket become important in order to obtain a ceramic body of sufficiently high quality. Using the values of $\Delta T$ and the thickness of the felt jacket given in Tables 1 and 3, respectively, results similar to those of for the 650 mm ceramic body are obtained for the 400 mm and 500 mm ceramic bodies. However, compared to the 650 mm ceramic body, a higher power density is required for the 500 mm ceramic body, with an even higher power density required for the 400 mm ceramic body.

**Reference list**

| | |
|---|---|
| 100 | Device according to the invention |
| 001 | First pushing means |
| 002 | First piston |
| 003 | First punch |
| 004 | First punch interior surface |
| 005 | Interior surface of die |
| 006 | Die |
| 007 | Second punch interior surface |
| 008 | Second punch |
| 009 | Second piston |
| 010 | Second pushing means |
| 011 | Compression axis |
| 012 | Electrical power source |
| 013 | Sintering chamber |
| 014, 015 | Layers of the first kind |
| 016, 017 | Thickness of layers of the first kind |
| 018 | Layer of the further kind |
| 019 | Exterior surface of die |
| 020 | First punch exterior surface |
| 021 | Second punch exterior surface |
| 022 | Thickness of layer of the further kind parallel to compression axis |
| 023 | Thickness of layer of the further kind perpendicular to compression axis |
| 200 | Preparation process for ceramic body |
| 201 | Step a. |
| 202 | Step b. |
| 203 | Step c. |
| 204 | Step d. |
| | |
| 300 | Cross-section of sinter chamber |
| 301 | Distance over which temperature gradient is measured |
| 302 | Wall thickness of die |
| 303 | Sinter chamber diameter |
| | |
| 400 | Core test setup |
| 401 | Coring Tool |
| 402 | First flat surface |
| 403 | Drill depth |
| 404 | Sample thickness |
| 405 | Geometric centre |
| 406 | Flat-form ceramic sample |
| 407 | Coring region |
| 408 | Direction of motion perpendicular to flat-form ceramic sample |
| 409 | Tip of coring tool |
| 410 | Cylindrical section removed from flat-form ceramic sample |

**Claims**

1. A device having a sintering chamber (013), the sintering chamber (013) being bordered by the following device parts:

      i. a first punch interior surface (004) of a first punch (003);
      ii. a second punch interior surface (007) of a second punch (008); and
      iii. an interior surface (005) of a die (006);

wherein:

the punches (003, 008) are adapted and arranged to apply a pressure of at least 1 MPa along a compression axis (011) to a target in the sintering chamber (013);
the first punch (003) and the second punch (008) are connected to an electrical power source (012);
the first and second punches (003, 008) comprise at least 50 wt. % carbon,
based on the total weight of the punch (003, 008);
the sintering chamber (013) has a cross-sectional width W perpendicular to the
compression axis (011) of at least 300 mm;

wherein the device is adapted and arranged to control a temperature in the sintering chamber.

2. The device according to claim 1, further comprising a first layer of the first kind (014) that is in physical contact with a surface of the first punch (003), wherein the first layer of the first kind has an electrical resistivity in the range of 10 $\mu\Omega\cdot$m to 260 $\mu\Omega\cdot$m.

3. The device according to claim 2, wherein the first layer of the first kind has a thermal conductivity in the range of 0.1 $W\cdot m^{-1}\cdot K^{-1}$ to 55 $W\cdot m^{-1}\cdot K^{-1}$.

4. The device according to any of the claims 2 to 3, wherein the first layer of the first kind comprises carbon, silicon, or a combination thereof.

5. The device according to any of the preceding claims, wherein the device further comprises a layer of the further kind arranged at least partially around an exterior surface (019) of the die, and wherein the layer of the further kind has a thermal conductivity, measured at 1400 °C, that is in the range of 0.2 $W\cdot m^{-1}\cdot K^{-1}$ to 0.65 $W\cdot m^{-1}\cdot K^{-1}$.

6. The device according to the preceding claim 5, wherein the layer of the further kind has at least one or all of the following properties:

a. a density in the range of 0.005 $g.cm^{-3}$ to 0.22 $g\cdot cm^{-3}$;
b. a mean specific heat capacity, measured at a temperature of 1400 °C, in the range of 1.40 $J\cdot g^{-1}\cdot{}^{\circ}C^{-1}$ to 1.95 $J\cdot g^{-1}\cdot{}^{\circ}C^{-1}$;
c. a thermal emissivity in the range of 0.7 and 0.99.

7. The device according to any of the claims 5 to 6, wherein the layer of the further kind comprises carbon, a ceramic, molybdenum, or a combination of at least two thereof.

8. The device according to any of the claims 5 to 7, wherein the layer of the further kind has a thickness in the range of 1 mm to 45 mm.

9. A process for the preparation of a ceramic body, comprising the steps:

a. providing a plurality of particles;
b. providing a device that comprises a sintering chamber (013) bordered by a die (006);
c. introducing the particles into the sintering chamber;
d. applying a pressure P in the range from 1 MPa to 80 MPa to the plurality of particles in the sintering chamber to obtain the ceramic body,

wherein
a temperature in the sintering chamber, during preparation of the ceramic body, is controlled so that the temperature at a centre of the sintering chamber is lower than the temperature at an interior surface (006) of the die.

10. The process according to claim 9, wherein a temperature gradient between the centre of the sintering chamber and the interior surface of the die is in the range of 0.005 °C/mm to 0.55 °C/mm.

11. The process according to any of the claims 9 to 10, wherein the sintering chamber is bordered by at least one punch with a punch surface, and wherein the electrical power density measured at the punch surface is adjusted according to a diameter of the ceramic body that is prepared.

**12.** The process according to the preceding claim 11, wherein the electrical power density is decreased when the diameter of the ceramic body, to be prepared, is increased.

**13.** The process according to any of the claims 9 to 12, further comprising the step of allowing the prepared ceramic body to cool in the sintering chamber at a rate that is in the range of in the range of 100 °C·hour$^{-1}$ to 165 °C·hour$^{-1}$.

**14.** The process according to any of the claims 9 to 12, wherein the device is according to any of the claims 1 to 8

**15.** A ceramic body obtainable by a process according to any of the claims 9 to 14.

**16.** The ceramic body according to claim 15, wherein at least one or all of the following are satisfied:

  a. A value for density divided by theoretical density that is less than 1.0;
  b. An average grain size of less than 5 $\mu$m;
  c. A standard deviation for the average grain size distribution that is in the range of 1.8 $\pm$ 2 $\mu$m to 2.2 $\pm$ 2 $\mu$m.

**17.** An assembly comprising a ceramic body according to any of the claims 15 to 16.

**18.** A use of a temperature difference for preparing a ceramic body having an extension of at least 300 mm by spark plasma sintering.

**19.** A use of a layer of the first kind for preparing a ceramic body having an extension of at least 300 mm by spark plasma sintering.

**20.** A use of a layer of the further kind for preparing a ceramic body having an extension of at least 300 mm by spark plasma sintering.

**Figure 1A**

<u>100</u>

**Figure 1B**

<u>100</u>

## Figure 1C

100

## Figure 1D

**Figure 1E**

<u>100</u>

**Figure 2**

<u>100</u>

## Figure 3

200

```
┌─────────────┐
│     201     │
└─────────────┘
       ⇩
┌─────────────┐
│     202     │
└─────────────┘
       ⇩
┌─────────────┐
│     203     │
└─────────────┘
       ⇩
┌─────────────┐
│     204     │
└─────────────┘
```

## Figure 4

300

## Figure 5A

400

401

408

409

402

405

407

406

## Figure 5B

401

404

402

406

410

403

## Figure 6

Core Test Success

## Figure 7

Operating Dwell Power Density vs Part Diameter

Europäisches
Patentamt

European
Patent Office

Office européen
des brevets

# EUROPEAN SEARCH REPORT

Application Number

EP 22 20 4701

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/072703 A1 (HERAEUS CONAMIC NORTH AMERICA LLC [US]) 7 April 2022 (2022-04-07) * figures 1-3 * * paragraphs [0088], [0136], [0145], [0146], [0164], [0165], [0177] * | 1-4,9-20 | INV. B28B3/02 B22F3/105 B28B3/08 B28B11/24 B30B11/04 B30B15/34 B22F3/14 |
| X | JP 2004 323920 A (SUMITOMO HEAVY IND TECHNO FORT; HITACHI POWDERED METALS) 18 November 2004 (2004-11-18) * figure 1 * * the whole document * | 1,5-9, 11,12, 14,15, 18-20 | |
| A | DE 10 2018 201205 A1 (SIEMENS AG [DE]) 1 August 2019 (2019-08-01) * figure 1 * * paragraph [0009] * * claims 1,2 * | 2-4 | |
| A | US 2022/270768 A1 (SUBHASH GHATU [US] ET AL) 25 August 2022 (2022-08-25) * figure 1 * * paragraph [0059] * | 5-8 | TECHNICAL FIELDS SEARCHED (IPC) B28B C22C B22F B30B C04B |
| A | US 2014/367251 A1 (SONY CORP) 18 December 2014 (2014-12-18) * figure 4 * * paragraphs [0071] - [0084] * | 2-8 | |

The present search report has been drawn up for all claims

| Place of search | Date of completion of the search | Examiner |
|---|---|---|
| The Hague | 29 March 2023 | Voltz, Eric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 20 4701

This annex lists the patent family members relating to the patent documents cited in the above-mentioned European search report.
The members are as contained in the European Patent Office EDP file on
The European Patent Office is in no way liable for these particulars which are merely given for the purpose of information.

29-03-2023

| Patent document cited in search report | | Publication date | Patent family member(s) | | Publication date |
|---|---|---|---|---|---|
| WO 2022072703 | A1 | 07-04-2022 | TW 202222740 A<br>WO 2022072703 A1 | | 16-06-2022<br>07-04-2022 |
| JP 2004323920 | A | 18-11-2004 | NONE | | |
| DE 102018201205 | A1 | 01-08-2019 | DE 102018201205 A1<br>WO 2019145498 A1 | | 01-08-2019<br>01-08-2019 |
| US 2022270768 | A1 | 25-08-2022 | US 2015221398 A1<br>US 2021057115 A1<br>US 2022270768 A1<br>WO 2014028731 A1 | | 06-08-2015<br>25-02-2021<br>25-08-2022<br>20-02-2014 |
| US 2014367251 | A1 | 18-12-2014 | CN 104233203 A<br>JP 6139289 B2<br>JP 2015001022 A<br>US 2014367251 A1 | | 24-12-2014<br>31-05-2017<br>05-01-2015<br>18-12-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **EUGENE A. OLEVSKY et al.** Fundamental Aspects of Spark Plasma Sintering: I. Experimental Analysis of Scalability. *J. Am. Ceram. Soc.,* 2012, vol. 95 (8), 2406-2413

- Fundamental Aspects of Spark Plasma Sintering: II. Experimental Analysis of Scalability. *J. Am. Ceram. Soc.,* 2012, vol. 95 (8), 2414-2422